# EUROPEAN PATENT APPLICATION

(11) **EP 4 694 361 A1**
(43) Date of publication of application: **11.02.2026**
(21) Application number: 24779303.7
(22) Date of filing: 08.03.2024
(51) Int. Cl.: H04W 48/18, H04W 8/02, H04W 48/16

(54) **TERMINAL DEVICE, COMMUNICATION DEVICE, COMMUNICATION SYSTEM, AND COMMUNICATION METHOD**

(30) Priority: 29.03.2023 JP 2023054347
(71) Applicant: Sony Group Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2024/009081
(87) International publication number: WO 2024/203172

(57) **Abstract**

A terminal apparatus of the present disclosure includes a communication section and a control section. The communication section communicates with a first private network including a first core network in a first area. Alternatively, the communication section communicates with a second private network including a second core network different from the first core network in a second area. The control section cancels registration of the first core network and performs registration to the second core network according to the position of the own apparatus.

## Description

### Field

The present disclosure relates to a terminal apparatus, a communication apparatus, a communication system, and a communication method.

### Background

Development of cellular wireless communication such as 5G has been actively conducted. In recent years, a private network using cellular wireless communication has attracted attention.

### Citation List

### Patent Literature

Patent Literature 1: JP 2022-177255 A

### Summary

### Technical Problem

When the private network becomes widespread, it is conceivable that the number of private networks to which one terminal apparatus can be connected increases. In this case, it is desirable to enable the terminal apparatus to move between different private networks.

One way in which one terminal apparatus moves between a plurality of cellular networks is roaming. However, it is difficult to apply roaming to a private network that is a small network.

Therefore, the present disclosure provides a mechanism by which a terminal apparatus can move between a plurality of private networks.

Note that the above problem or object is merely one of a plurality of problems or objects that can be solved or achieved by the plurality of embodiments disclosed in the present specification.

### Solution to Problem

A terminal apparatus of the present disclosure includes a communication section and a control section. The communication section communicates with a first private network including a first core network in a first area. Alternatively, the communication section communicates with a second private network including a second core network different from the first core network in a second area. The control section cancels registration of the first core network and performs registration to the second core network according to the position of the own apparatus.

### Brief Description of Drawings

FIG. 1 is a diagram illustrating an example of communication processing according to a proposed technology of the present disclosure.
FIG. 2 is a diagram illustrating a configuration example of an information processing apparatus according to an embodiment of the present disclosure.
FIG. 3 is a diagram illustrating a configuration example of a base station according to an embodiment of the present disclosure.
FIG. 4 is a diagram illustrating a configuration example of a terminal apparatus according to an embodiment of the present disclosure.
FIG. 5 is a diagram illustrating an example of 5G architecture.
FIG. 6 is a diagram illustrating a usage example of Private/4G.
FIG. 7 is a diagram for explaining an API of a 5G core network.
FIG. 8 is a diagram for explaining an API of a 5G core network.
FIG. 9 is a diagram illustrating an example of a schematic configuration of a communication system according to the first embodiment of the present disclosure.
FIG. 10 is a diagram illustrating another example of the schematic configuration of the communication system according to the first embodiment of the present disclosure.
FIG. 11 is a diagram illustrating a configuration example of an IMSI.
FIG. 12 is a diagram illustrating an example of communication processing according to the first embodiment of the present disclosure.
FIG. 13 is a diagram illustrating an example of communication processing according to the second embodiment of the present disclosure.
FIG. 14 is a diagram illustrating an example of a communication system according to the second embodiment of the present disclosure.
FIG. 15 is a sequence diagram illustrating an example of a flow of communication processing according to the third embodiment of the present disclosure.
FIG. 16 is a sequence diagram illustrating another example of a flow of communication processing according to the third embodiment of the present disclosure.
FIG. 17 is a diagram illustrating an example of an eSIM according to the fourth embodiment of the present disclosure.
FIG. 18 is a sequence diagram illustrating an example of a flow of communication processing according to the fourth embodiment of the present disclosure.
FIG. 19 is a sequence diagram illustrating another example of a flow of communication processing according to the fourth embodiment of the present disclosure. Description of Embodiments

Hereinafter, embodiments of the present disclosure will be described in detail with reference to the accompanying drawings. Note that, in the present specification and the drawings, components having substantially the same functional configuration are denoted by the same reference signs, and redundant description is omitted.

In addition, in the present specification and the drawings, a plurality of components having substantially the same functional configuration may be distinguished by attaching different alphabets or numbers after the same reference sign. For example, a plurality of configurations having substantially the same functional configuration is distinguished as private networks PN1_A and PN1_B and base stations 20A and 20B as necessary. However, in a case where it is not particularly necessary to distinguish each of a plurality of components having substantially the same functional configuration, only the same reference sign is attached. For example, in a case where it is not necessary to particularly distinguish the private networks PN1_A and PN1_B, the private networks PN1_A and PN1_B are simply referred to as a private network PN1. For example, in a case where it is not necessary to particularly distinguish the base stations 20A and 20B, the base stations are simply referred to as base stations 20.

One or a plurality of embodiments (including examples, modifications, and application examples) described below can each be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

### <<1. Overview>>

In recent years, private networks such as a local 5G and a private 5G have attracted attention. The private network is also referred to as a non public network.

### <1-1. Overview of Private Network>

Before describing an overview of the present embodiment, an overview of a private network will be described.

### <1-1-1. Local 5G/Private 5G>

The local 5G and the private 5G are cellular communication services performed in a limited area such as a factory, an office, a studio, in a hospital, or in a university. By limiting the service provision to a local area, there is an advantage that a customized cellular service can be provided.

Note that, in the present embodiment, the private 5G and the local 5G may be referred to as a 4G/5G private network or a 4G/5G virtual private network. Note that the private network is not limited to the 4G/5G private network. In the following description, the private network may be referred to as a non-public cellular closed network or simply a closed network.

Security is emphasized in many use cases. For example, in the case of a factory, there is a case of handling a technique with high confidentiality such as a production line of the factory. Even in hospitals and the like, personal information regarding patient privacy is often handled. As described above, confidentiality is high in many use cases. Even in universities and offices, personal information is often handled, and communication related to the personal information is required to have high confidentiality.

### <1-1-2. Plurality of Private Networks in Locations Requiring Confidentiality>

Security is ensured in a private network. However, not all users with access to the private network are trusted. Therefore, the number of users who use the private network is required to be minimized.

For example, in a factory, different lines are provided for each product. For example, in a case where a camera, a game, and the like are manufactured in one factory, a manufacturing line is provided for each camera and game. At this time, the private network used in the line manufacturing the camera is desirably accessed only by a manufacturing apparatus or a user related to the manufacturing of the camera.

Therefore, if there is a plurality of manufacturing lines in a factory, different private networks may be installed for each manufacturing line.

Meanwhile, it is conceivable that an automatic conveyance robot or the like moving around in a factory moves across a plurality of manufacturing lines. That is, the automatic conveyance robot may travel between a plurality of private networks. As described above, some terminal apparatuses such as automatic conveyance robots are required to be able to move between different private networks.

### <1-1-3. Plurality of Private Networks in Public Infrastructure>

For example, it is conceivable to monitor a public infrastructure such as a railway or a road using a private network.

In a case where an area extending over a wide area such as a public infrastructure is monitored by one private network, if this private network goes down, the influence on the public infrastructure increases. For example, when a part (for example, a control plane) of the core network of the private network goes down, communication cannot be performed over a wide area.

Therefore, in a case where an area extending over a wide area is monitored by using a private network, monitoring can be performed by dividing the area (region) and using each of a plurality of private networks.

A train or a car moving on a railway or a road similarly moves between a plurality of private networks. As described above, even in the public infrastructure, it is required to enable some terminal apparatuses such as trains and cars to move between different private networks.

### <1-1-4. Roaming>

For example, a method in which a terminal apparatus moves between a plurality of cellular networks by using the same subscriber identity module (SIM) includes roaming. With the roaming, the terminal apparatus can connect to a cellular network of a movement destination country, for example, in a case of moving to a different country.

In order to use roaming, roaming agreements need to be made between operators of different cellular networks. In addition, even in a case where a roaming agreement is made, the terminal apparatus may not move to another cellular network while receiving a weak radio wave. As described above, even in a case where the communication quality of one cellular network is poor and the user wants to move to another cellular network, there is a possibility that the terminal apparatus cannot move to the other cellular network.

In addition, when the number of private networks increases, it may become complicated to make a roaming agreement between the private networks. Also, operating the roaming mechanism in a private network (particularly a small private network) is complex and can increase costs.

As described above, there is a demand for a technique for moving between private networks using a technique different from roaming.

### <1-2. Overview of Proposed Technology>

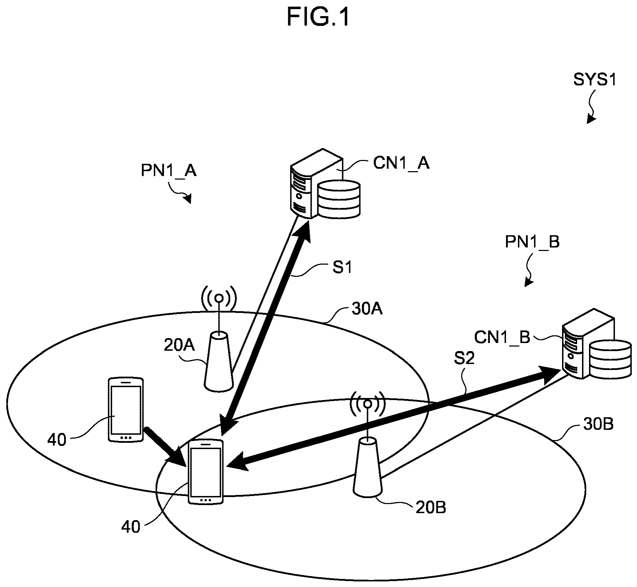

FIG. 1 is a diagram illustrating an example of communication processing according to the proposed technology of the present disclosure. The communication processing according to the proposed technology is executed by a communication system SYS1. First, a schematic configuration example of the communication system SYS1 will be described.

The communication system SYS1 illustrated in FIG. 1 includes a private network PN1_A (an example of a first private network), a private network PN1_B (an example of a second private network), and a terminal apparatus 40.

The private network PN1_A includes the base station 20A and a core network CN1_A. The base station 20A operates a cell 30A and provides a wireless communication service to one or more terminal apparatuses 40 located within the coverage of the cell 30A. The cell 30A is operated according to an arbitrary wireless communication scheme such as LTE or NR.

The base station 20A is connected to the core network CN1_A. The core network CN1_A is connected to a packet data network (not illustrated) via a gateway apparatus (not illustrated).

Note that, although FIG. 1 illustrates a case where the private network PN1_A includes one base station 20A, the private network PN1_A may include a plurality of base stations 20A. The cell 30A operated by the base station 20A is an area (an example of a first area) in which the private network PN1_A provides the communication service.

The private network PN1_B includes the base station 20B and a core network CN1_B. The core network CN1_B is different from the core network CN1_A.

The base station 20B operates a cell 30B and provides a wireless communication service to one or more terminal apparatuses 40 located within the coverage of the cell 30B. The cell 30B is operated according to an arbitrary wireless communication scheme such as LTE or NR.

The base station 20B is connected to the core network CN1_B. The core network CN1_B is connected to a packet data network (not illustrated) via a gateway apparatus (not illustrated).

Note that, although FIG. 1 illustrates a case where the private network PN1_B includes one base station 20B, the private network PN1_B may include a plurality of base stations 20B. Furthermore, the base station 20A may have at least some functions of the base station 20B. That is, the base station 20A can also function as the base station 20B. Similarly, the base station 20B can also function as the base station 20A.

The cell 30B operated by the base station 20B is an area (an example of a second area) in which the private network PN1_B provides the communication service. As illustrated in FIG. 1, at least a part of the cell 30B overlaps the cell 30A, but the cell 30A and the cell 30B may completely overlap, or the cell 30A and the cell 30B may not overlap. The terminal apparatus 40 can be connected to both the private network PN1_A and the private network PN1_B in an area where the cell 30A and the cell 30B overlap.

Here, a case where the terminal apparatus 40 moves from the cell 30A to the cell 30B will be considered. The terminal apparatus 40 is connected to a private network PN1_A in the cell 30A. Thereafter, when moving to the cell 30B, the terminal apparatus 40 switches the connection from the private network PN1_A to the private network PN1_B.

However, since the private networks PN1_A and PN1_B are different networks, the base stations 20A and 20B cannot perform handover. In addition, in an area where the cell 30A and the cell 30B overlap, it is possible to connect to both the private network PN1_A and the private network PN1_B. Therefore, in a case where the conventional terminal apparatus 40 can be connected even if the radio wave of one network (for example, the private network PN1_A) becomes weak, it is difficult to connect to the other network (for example, the private network PN1_B).

Therefore, as illustrated in FIG. 1, in the communication processing according to the present embodiment, the terminal apparatus 40 cancels the registration of the core network CN1_A of the private network PN1_A according to the position of the own apparatus (step S1). For example, the terminal apparatus 40 performs detachment (or deregistration) via the base station 20A and cancels the registration of the core network CN1_A.

Next, the terminal apparatus 40 registers the private network PN1_B in the core network CN1_B (step S2). For example, the terminal apparatus 40 performs attachment (or registration) via the base station 20B and registers in the core network CN1_B.

Accordingly, the terminal apparatus 40 can switch the connection destination from the private network PN1_A to the private network PN1_B.

### <<2. Configuration of Communication System>>

Although the overview of the present embodiment has been described above, each component of the communication system SYS1 according to the present embodiment will be described before describing the present embodiment in detail. Note that the communication system SYS1 can be rephrased as an information processing system SYS1.

### <2-1. Configuration Example of Information Processing Apparatus>

The information processing apparatus 10 is an information processing apparatus (computer) constituting a private network PN1. For example, the information processing apparatus 10 is an information processing apparatus that realizes at least a part of the functions of the core network CN1. For example, the information processing apparatus 10 is an information processing apparatus that realizes at least a part of the functions of a management apparatus 50 or a SIM server 60 to be described later.

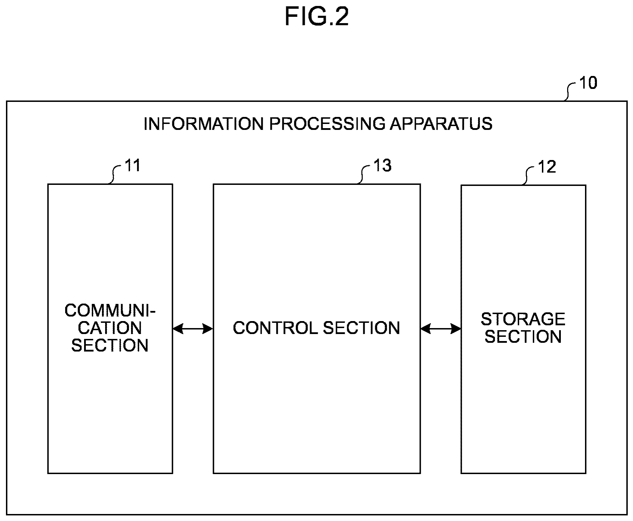

FIG. 2 is a diagram illustrating a configuration example of the information processing apparatus 10 according to the embodiment of the present disclosure. The information processing apparatus 10 includes a communication section 11, a storage section 12, and a control section 13. Note that the configuration illustrated in FIG. 2 is a functional configuration, and the hardware configuration may be different from the functional configuration. Furthermore, the functions of the information processing apparatus 10 may be statically or dynamically distributed and implemented in a plurality of physically separated configurations. For example, the information processing apparatus 10 may include a plurality of server apparatuses.

The communication section 11 is a communication interface for communicating with other apparatuses. The communication section 11 may be a network interface or equipment connection interface. For example, the communication section 11 may be a local area network (LAN) interface such as a network interface card (NIC), or may be a USB interface including a universal serial bus (USB) host controller, a USB port, and the like. Furthermore, the communication section 11 may be a wired interface or a wireless interface. The communication section 11 functions as a communication means of the information processing apparatus 10. The communication section 11 communicates with another information processing apparatus 10, the base station 20, and the like under the control of the control section 13.

The storage section 12 is a data readable/writable storage apparatus such as a dynamic random access memory (DRAM), a static random access memory (SRAM), a flash memory, or a hard disk. The storage section 12 functions as a storage means of the information processing apparatus 10.

The control section 13 is a controller that controls each section of the information processing apparatus 10. The control section 13 is realized by, for example, a processor such as a central processing unit (CPU), a micro processing unit (MPU), or a graphics processing unit (GPU). For example, the control section 13 is implemented by a processor executing various programs stored in a storage apparatus inside the information processing apparatus 10 using a random access memory (RAM) or the like as a work area. Note that the control section 13 may be realized by an integrated circuit such as an application specific integrated circuit (ASIC) or a field programmable gate array (FPGA). Any of the CPU, the MPU, the GPU, the ASIC, and the FPGA can be regarded as a controller.

### <2-2. Configuration of Base Station>

Next, a configuration of the base station 20 will be described. The base station 20 can be rephrased as a base station (BS).

The base station 20 is a wireless communication apparatus that performs wireless communication with the terminal apparatus 40. The base station 20 may be configured to wirelessly communicate with the terminal apparatus 40 via a relay station, or may be configured to directly wirelessly communicate with the terminal apparatus 40.

The base station 20 is a type of communication apparatus. More specifically, the base station 20 is an apparatus corresponding to a wireless base station (Base Station, Node B, eNB, gNB, or the like) or a wireless access point (Access Point). The base station 20 may be a wireless relay station. Furthermore, the base station 20 may be an optical extension apparatus called a remote radio head (RRH) or a radio unit (RU). Furthermore, the base station 20 may be a receiving station such as a field pickup unit (FPU). Furthermore, the base station 20 may be an Integrated Access and Backhaul (IAB) donor node or an IAB relay node that provides a radio access line and a radio backhaul line by time division multiplexing, frequency division multiplexing, or space division multiplexing.

Note that the radio access technology used by the base station 20 may be a cellular communication technology or a wireless LAN technology. Of course, the radio access technology used by the base station 20 is not limited thereto, and may be another radio access technology. For example, the radio access technology used by the base station 20 may be a low power wide area (LPWA) communication technology. Of course, the wireless communication used by the base station 20 may be wireless communication using millimeter waves. In addition, the wireless communication used by the base station 20 may be wireless communication using radio waves or wireless communication (optical wireless) using infrared rays or visible light. Furthermore, the base station 20 may be capable of non-orthogonal multiple access (NOMA) communication with the terminal apparatus 40. Here, the NOMA communication is communication using a non-orthogonal resource (transmission, reception, or both). Note that the base station 20 may be able to perform NOMA communication with another base station 20.

Note that the base stations 20 may be able to communicate with each other via a base station-core network interface (for example, NG Interface, S1 Interface, and the like). This interface may be either wired or wireless. Furthermore, the base stations may be capable of communicating with each other via an inter-base station interface (for example, Xn Interface, X2 Interface, S1 Interface, F1 Interface, and the like). This interface may be either wired or wireless.

Note that the concept of the base station includes not only a donor base station but also a relay base station (also referred to as a relay station). For example, the relay base station may be any one of RF Repeater, Smart Repeater, and Intelligent Surface. In addition, the concept of the base station includes not only a structure having a function of the base station but also an apparatus installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of a structure includes not only a building but also a construction (non-building structure) such as a tunnel, a bridge, a dam, a wall, or an iron pillar, and equipment such as a crane, a gate, or a windmill. In addition, the concept of the structure includes not only a structure on land (on the ground in a narrow sense) or in the ground, but also a structure on water such as a pier or a mega-float, and a structure under water such as a marine observation facility. The base station may be rephrased as an information processing apparatus.

The base station 20 may be a donor station or a relay station. Furthermore, the base station 20 may be a fixed station or a mobile station. The mobile station is a wireless communication apparatus configured to be movable. At this time, the base station 20 may be an apparatus installed in a mobile body or may be a mobile body itself. For example, a relay station having mobility can be regarded as the base station 20 as a mobile station. In addition, an apparatus that is originally an apparatus having mobility and is equipped with a function of a base station (at least a part of the function of the base station), such as a vehicle, an unmanned aerial vehicle (UAV) typified by a drone, or a smartphone, also corresponds to the base station 20 as a mobile station.

Here, the mobile body may be a mobile terminal such as a smartphone or a mobile phone. In addition, the mobile body may be a mobile body (for example, a vehicle such as an automobile, a bicycle, a bus, a truck, a motorcycle, a train, or a linear motor car) that moves on land (on the ground in a narrow sense) or a mobile body (for example, the subway) that moves in the ground (for example, in the tunnel). In addition, the mobile body may be a mobile body (for example, a ship such as a passenger ship, a cargo ship, or a hovercraft) that moves over water or a mobile body (for example, submersible vehicles such as submersibles, submarines, and unmanned submersibles) that moves under water. Note that the mobile body may be a mobile body (for example, an aircraft such as an airplane, an airship, or a drone) that moves in the atmosphere.

Furthermore, the base station 20 may be a ground base station (ground station) installed on the ground. For example, the base station 20 may be a base station arranged in a structure on the ground, or may be a base station installed in a mobile body moving on the ground. More specifically, the base station 20 may be an antenna installed in a structure such as a building and a signal processing apparatus connected to the antenna. Of course, the base station 20 may be a structure or a mobile body itself. The "ground" is a ground in a broad sense including not only on land (on the ground in a narrow sense) but also in the ground, on water, and under water. Note that the base station 20 is not limited to a ground base station. For example, in a case where the communication system SYS1 is a satellite communication system, the base station 20 may be an aircraft station. From the perspective of a satellite station, an aircraft station located on the earth is a ground station.

Note that the base station 20 is not limited to a ground station. The base station 20 may be a non-ground base station (non-ground station) capable of floating in the air or space. For example, the base station 20 may be an aircraft station or a satellite station.

The satellite station is a satellite station capable of floating outside the atmosphere. The satellite station may be an apparatus mounted on a space vehicle such as an artificial satellite, or may be a space vehicle itself. A space vehicle is a mobile body that moves outside the atmosphere. Examples of the space vehicle include artificial bodies such as artificial satellites, spacecraft, space stations, and probes. Note that the satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be an apparatus mounted on a low earth orbiting satellite, a medium earth orbiting satellite, a geostationary earth orbiting satellite, or a highly elliptical orbiting satellite.

An aircraft station is a wireless communication apparatus capable of floating in the atmosphere, such as an aircraft. The aircraft station may be an apparatus mounted on an aircraft or the like, or may be an aircraft itself. Note that the concept of an aircraft includes not only heavy aircraft such as an airplane and a glider but also light aircraft such as a balloon and an airship. In addition, the concept of an aircraft includes not only a heavy aircraft and a light aircraft but also a rotorcraft such as a helicopter and an autogyroscope. Note that the aircraft station (alternatively, an aircraft on which an aircraft station is mounted) may be an unmanned aerial vehicle such as a drone.

Note that the concept of the unmanned aerial vehicle also includes an unmanned aircraft systems (UAS) and a tethered UAS. In addition, the concept of unmanned aerial vehicles also includes Lighter than Air UAS (LTA) and Heavier than Air UAS (HTA). Other concepts of unmanned aerial vehicles also include High Altitude UAS Platforms (HAPs).

The size of the coverage of the base station 20 may be large such as a macro cell or small such as a pico cell. Of course, the size of the coverage of the base station 20 may be extremely small such as a femto cell. In addition, the base station 20 may have a beamforming capability. In this case, in the base station 20, a cell or a service area may be formed for each beam.

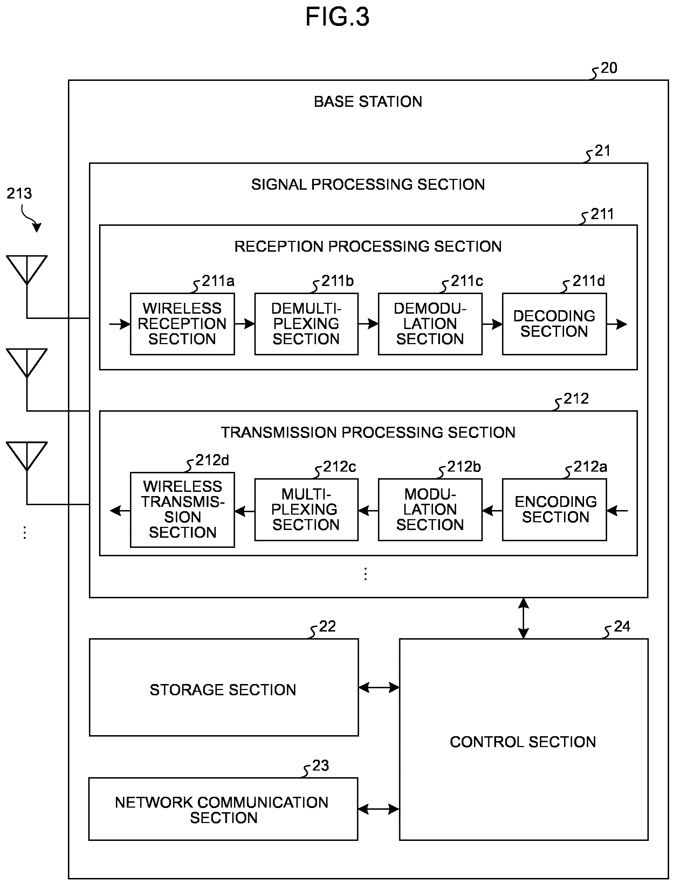

FIG. 3 is a diagram illustrating a configuration example of the base station 20 according to the embodiment of the present disclosure. The base station 20 is a communication apparatus (wireless system) that wirelessly communicates with the terminal apparatus 40. The base station 20 is a type of information processing apparatus.

The base station 20 includes a signal processing section 21, a storage section 22, a network communication section 23, and a control section 24. Note that the configuration illustrated in FIG. 3 is a functional configuration, and the hardware configuration may be different from the functional configuration. Furthermore, the functions of the base station 20 may be implemented in a distributed manner in a plurality of physically separated apparatuses.

The signal processing section 21 is a wireless communication interface that wirelessly communicates with other communication apparatuses (for example, the terminal apparatus 40 and the another base station 20). The signal processing section 21 is a wireless transceiver that operates under the control of the control section 24. The signal processing section 21 may support a plurality of wireless access schemes. For example, the signal processing section 21 may support both NR and LTE. The signal processing section 21 may support other cellular communication schemes such as W-CDMA and cdma2000. Furthermore, the signal processing section 21 may support a wireless LAN communication scheme in addition to the cellular communication scheme. Of course, the signal processing section 21 may correspond to only one wireless access scheme.

The signal processing section 21 includes a reception processing section 211, a transmission processing section 212, and an antenna 413. The signal processing section 21 may include a plurality of reception processing sections 211, a plurality of transmission processing sections 212, and a plurality of antennas 413. Note that, in a case where the signal processing section 21 supports a plurality of wireless access schemes, each section of the signal processing section 21 can be individually configured for each wireless access scheme. For example, if the base station 20 is compatible with NR and LTE, the reception processing section 211 and the transmission processing section 212 may be configured individually for NR and LTE.

The reception processing section 211 processes the uplink signal received via an antenna 213. The reception processing section 211 includes a wireless reception section 211a, a demultiplexing section 211b, a demodulation section 211c, and a decoding section 211d.

The wireless reception section 211a performs down-conversion, removal of an unnecessary frequency component, control of an amplification level, quadrature demodulation, conversion to a digital signal, removal of a guard interval, extraction of a frequency domain signal by fast Fourier transform, and the like on the uplink signal. For example, it is assumed that the wireless access scheme of the base station 20 is a cellular communication scheme such as LTE. At this time, the demultiplexing section 211b separates an uplink channel such as a physical uplink shared channel (PUSCH) or a physical uplink control channel (PUCCH) and an uplink reference signal from the signal output from the wireless reception section 211a. The demodulation section 211c demodulates the reception signal using a modulation scheme such as binary phase shift keying (BPSK) or quadrature phase shift keying (QPSK) with respect to the modulation symbol of the uplink channel. The modulation scheme used by the demodulation section 211c may be multi-level QAM such as 16 quadrature amplitude modulation (QAM), 64QAM, or 256QAM. The decoding section 211d performs decoding processing on the demodulated encoded bits of the uplink channel. The decoded uplink data and uplink control information are output to the control section 24.

The transmission processing section 212 performs processing of transmitting the downlink control information and the downlink data. The transmission processing section 212 includes an encoding section 212a, a modulation section 212b, a multiplexing section 212c, and a wireless transmission section 212d.

The encoding section 212a encodes the downlink control information and the downlink data input from the control section 24 using an encoding scheme such as block encoding, convolutional encoding, turbo encoding, or the like. The modulation section 212b modulates the encoded bits output from the encoding section 212a by a predetermined modulation scheme such as BPSK, QPSK, 16QAM, 64QAM, or 256QAM. The multiplexing section 212c multiplexes the modulation symbol of each channel and the downlink reference signal and arranges the multiplexed symbols in a predetermined resource element. The wireless transmission section 212d performs various types of signal processing on the signal from the multiplexing section 212c. For example, the wireless transmission section 212d performs processing such as conversion into a time domain by fast Fourier transform, addition of a guard interval, generation of a baseband digital signal, conversion into an analog signal, quadrature modulation, up-conversion, removal of an extra frequency component, and power amplification. The signal generated by the transmission processing section 212 is transmitted from the antenna 413.

The storage section 22 is a storage apparatus capable of reading and writing data, such as a DRAM, an SRAM, a flash memory, or a hard disk. The storage section 22 functions as a storage means of the base station 20.

The network communication section 23 is a communication interface for communicating with other apparatuses (for example, another base station 20). For example, the network communication section 23 is a local area network (LAN) interface such as a network interface card (NIC). The network communication section 23 may be a universal serial bus (USB) interface including a USB host controller, a USB port, and the like. Furthermore, the network communication section 23 may be a wired interface or a wireless interface. The network communication section 23 functions as a network communication means of the base station 20. The network communication section 23 communicates with other apparatuses under the control of the control section 24.

The control section 24 is a controller that controls each section of the base station 20. The control section 24 is realized by, for example, a processor such as a central processing unit (CPU) or a micro processing unit (MPU). For example, the control section 24 is implemented by a processor executing various programs stored in a storage apparatus inside the base station 20 using a random access memory (RAM) or the like as a work area. Note that the control section 24 may be realized by an integrated circuit such as an application specific integrated circuit (ASIC) or a field programmable gate array (FPGA). Any of the CPU, the MPU, the ASIC, and the FPGA can be regarded as a controller.

### <2-3. Configuration of Terminal Apparatus>

Next, a configuration of the terminal apparatus 40 will be described. The terminal apparatus 40 is a communication apparatus that wirelessly communicates with the base station 20 on the basis of control by the base station 20. The terminal apparatus 40 can be rephrased as user equipment (UE).

The terminal apparatus 40 is a wireless communication apparatus that wirelessly communicates with other communication apparatuses such as the base station 20. The terminal apparatus 40 is, for example, a mobile phone, a smart device (smartphone or tablet), a personal digital assistant (PDA), or a personal computer. Furthermore, the terminal apparatus 40 may be equipment such as a business camera having a communication function, or may be a motorcycle, a moving relay vehicle, or the like on which communication equipment such as a field pickup unit (FPU) is mounted. Furthermore, the terminal apparatus 40 may be an industrial robot having a communication function. Furthermore, the terminal apparatus 40 may be a Machine to Machine (M2M) device or an Internet of Things (IoT) device. The terminal apparatus 40 may be a mobile body such as an automobile or a drone.

Note that the terminal apparatus 40 may be able to perform NOMA communication with the base station 20. Furthermore, the terminal apparatus 40 may be able to use an automatic retransmission technology such as HARQ when communicating with the base station 20. The terminal apparatus 40 may be capable of sidelink communication with another terminal apparatus 40. The terminal apparatus 40 may also be able to use an automatic retransmission technology such as HARQ when performing sidelink communication. Note that the terminal apparatus 40 may also be capable of NOMA communication in communication (sidelink) with other terminal apparatuses 40. Furthermore, the terminal apparatus 40 may be able to perform LPWA communication with another communication apparatus (for example, the base station 20 and another terminal apparatus 40). Furthermore, the wireless communication used by the terminal apparatus 40 may be wireless communication using millimeter waves. Note that the wireless communication (including sidelink communication) used by the terminal apparatus 40 may be wireless communication using radio waves or wireless communication (optical wireless) using infrared rays or visible light.

Furthermore, the terminal apparatus 40 may be a mobile apparatus. The mobile apparatus is a movable wireless communication apparatus. At this time, the terminal apparatus 40 may be a wireless communication apparatus installed in a mobile body or may be a mobile body itself. For example, the terminal apparatus 40 may be a vehicle that moves on a road such as an automobile, a bus, a truck, or a motorcycle, a vehicle that moves on a rail installed on a track such as a train, or a wireless communication apparatus mounted on the vehicle. Note that the mobile body may be a mobile terminal, or may be a mobile body that moves on land (on the ground in a narrow sense), in the ground, on water, or under water. Furthermore, the mobile body may be a mobile body that moves inside the atmosphere, such as a drone or a helicopter, or may be a mobile body that moves outside the atmosphere, such as an artificial satellite.

The terminal apparatus 40 may be simultaneously connected to a plurality of base stations or a plurality of cells to perform communication. For example, in a case where one base station supports a communication area via a plurality of cells (for example, pCell and sCell), the plurality of cells can be bundled and communicated between the base station 20 and the terminal apparatus 40 by a carrier aggregation (CA) technology, a dual connectivity (DC) technology, or a multi-connectivity (MC) technology. Alternatively, the terminal apparatus 40 and the plurality of base stations 20 can communicate with each other by a coordinated transmission and reception (CoMP: Coordinated Multi-Point Transmission and Reception) technology via cells of different base stations 20.

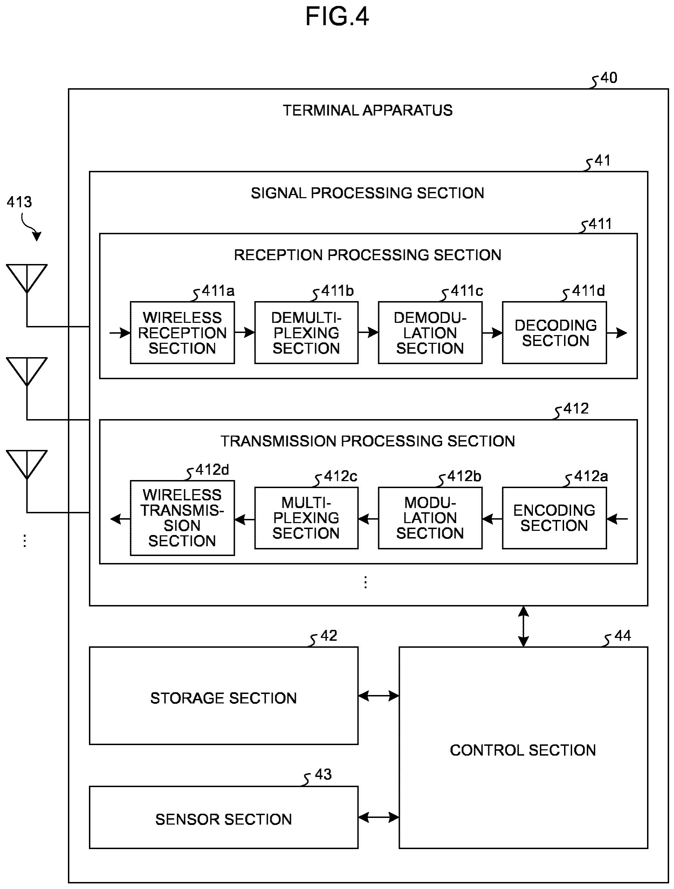

FIG. 4 is a diagram illustrating a configuration example of the terminal apparatus 40 according to the embodiment of the present disclosure. The terminal apparatus 40 is a communication apparatus (wireless system) that wirelessly communicates with the base station 20. The terminal apparatus 40 is a type of information processing apparatus.

The terminal apparatus 40 includes a signal processing section 41, a storage section 42, a sensor section 44, and a control section 45. Note that the configuration illustrated in FIG. 4 is a functional configuration, and the hardware configuration may be different from the functional configuration. Furthermore, the functions of the terminal apparatus 40 may be implemented in a distributed manner in a plurality of physically separated configurations.

The signal processing section 41 is a wireless communication interface that wirelessly communicates with other communication apparatuses (for example, the base station 20 and the another terminal apparatus 40). The signal processing section 41 is a wireless transceiver that operates under the control of the control section 45. The signal processing section 41 corresponds to one or a plurality of wireless access schemes. For example, the signal processing section 41 corresponds to both NR and LTE. The signal processing section 41 may support other wireless access schemes such as W-CDMA and cdma2000.

The signal processing section 41 includes a reception processing section 411, a transmission processing section 412, and an antenna 413. The signal processing section 41 may include a plurality of reception processing sections 411, a plurality of transmission processing sections 412, and a plurality of antennas 413. Note that, in a case where the signal processing section 41 supports a plurality of wireless access schemes, each section of the signal processing section 41 can be individually configured for each wireless access scheme. For example, the reception processing section 411 and the transmission processing section 412 may be individually configured by LTE and NR. The configurations of the reception processing section 411 and the transmission processing section 412 are similar to those of the reception processing section 211 and the transmission processing section 212 of the base station 20.

The storage section 42 is a storage apparatus capable of reading and writing data, such as a DRAM, an SRAM, a flash memory, or a hard disk. The storage section 42 functions as a storage means of the terminal apparatus 40. The storage section 42 can store, for example, map information to be described later.

The sensor section 44 is a sensor group that acquires various types of sensor information regarding the state of the terminal apparatus 40, the situation around the terminal apparatus 40, the state of the user, and the like. For example, the sensor section 44 includes an inertial sensor that measures acceleration and angular velocity of the terminal apparatus 40. Furthermore, for example, the sensor section 44 includes a camera that images the surroundings of the terminal apparatus 40 and the user. Furthermore, for example, the sensor section 44 includes a global navigation satellite system (GNSS) such as a global positioning system (GPS).

The control section 45 is a controller that controls each section of the terminal apparatus 40. The control section 45 is realized by, for example, a processor such as a CPU or an MPU. For example, the control section 45 is realized by a processor executing various programs stored in a storage apparatus inside the terminal apparatus 40 using a RAM or the like as a work area. Note that the control section 45 may be realized by an integrated circuit such as an ASIC or an FPGA. Any of the CPU, the MPU, the ASIC, and the FPGA can be regarded as a controller.

### <<3. Cellular Network>>

### <3-1. Network Architecture>

The configuration of the communication system SYS1 has been described above. Next, a network architecture applicable to the communication system SYS1 according to the present embodiment will be described. Hereinafter, an architecture of the fifth generation mobile body communication system (5G) will be described as an example of the core network CN1 of the communication system SYS1. The 5G architecture described herein is described, for example, in 3GPP TS23.501.

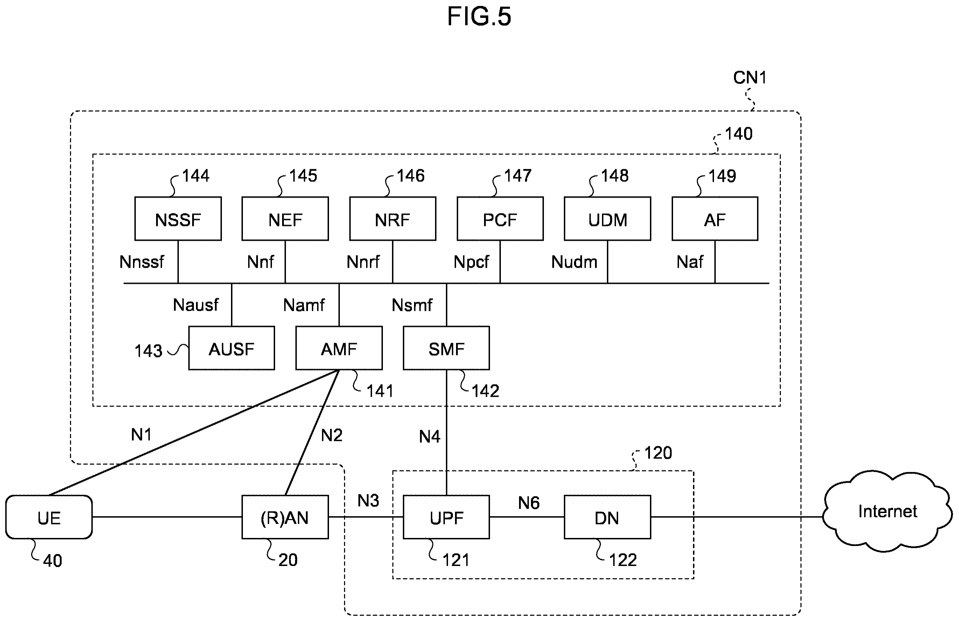

FIG. 5 is a diagram illustrating an example of 5G architecture. The 5G core network CN1 is also referred to as 5GC (5G Core)/NGC (Next Generation Core). Hereinafter, the 5G core network CN1 is also referred to as 5GC/NGC. The core network CN1 is connected to the user equipment (UE) 40 via the (R) AN 20. The UE 40 is, for example, the terminal apparatus 40.

The (R) AN 20 has a function of enabling connection to a radio access network (RAN) and connection to an access network (AN) other than the RAN. The (R) AN 20 includes a base station 20 called a gNB or an ng-eNB.

The core network CN1 mainly performs connection permission and session management when the UE 4 is connected to the network. The core network CN1 can include a user plane function group 120 and a control plane function group 140.

The user plane function group 120 includes a user plane function (UPF) 121 and a data network (DN) 122. The UPF 121 has a function of user plane processing. The UPF 121 includes a routing/forwarding function of data handled in a user plane. The DN 122 has a function of providing an entity, such as a mobile network operator (MNO), which provides a connection to an operator's own service, providing an Internet connection, or providing a connection to a third party service. As described above, the user plane function group 120 plays a role of a gateway serving as a boundary between the core network CN1 and the Internet.

The control plane function group 140 includes an access management function (AMF) 141, a session management function (SMF) 142, an authentication server function (AUSF) 143, a network slice selection function (NSSF) 144, a network exposure function (NEF) 145, a network repository function (NRF) 146, a policy control function (PCF) 147, a unified data management (UDM) 148, and an application function (AF) 149.

The AMF 141 has functions such as registration processing, connection management, and mobility management of the UE 30. The SMF 142 has functions such as session management and IP assignment and management of the UE 40. The AUSF 143 has an authentication function. The NSSF 144 has a function related to selection of a network slice. The NEF 145 has a function of providing network function capabilities and events to a third party, the AF 149, and edge computing functions.

The NRF 146 has a function of finding a network function and holding a profile of the network function. The PCF 147 has a function of policy control. The UDM 148 has functions of generating 3GPP AKA authentication information and processing a user ID. The AF 149 has a function of interacting with the core network CN1 and providing a service.

For example, the control plane function group 140 acquires information from the UDM 148 in which the subscriber information of the UE 40 is stored, and determines whether or not the UE 40 may connect to the network. The control plane function group 140 uses the contract information of the UE 40 and the key for encryption included in the information acquired from the UDM 148 for such determination. In addition, the control plane function group 140 generates a key for encryption and the like.

That is, the control plane function group 140 determines whether or not the network can be connected according to whether or not information of the UE 30 associated with a subscriber number called international mobile subscriber identity (IMSI) is stored in the UDM 148, for example. Note that the IMSI is stored in, for example, a subscriber identity module (SIM) card in the UE 40.

Here, Namf is a service-based interface provided by the AMF 141, and Nsmf is a service-based interface provided by the SMF 142. In addition, Nnef is a service-based interface provided by the NEF 145, and Npcf is a service-based interface provided by the PCF 147. Nudm is a service-based interface provided by the UDM 148, and Naf is a service-based interface provided by the AF 149. Nnrf is a service-based interface provided by the NRF 146, and Nnssf is a service-based interface provided by the NSSF 144. Nausf is a service-based interface provided by the AUSF 143. Each of these network functions (NFs) exchanges information with another NF via each service-based interface.

In addition, N1 illustrated in FIG. 5 is a reference point between the UE 40 and the AMF 141, and N2 is a reference point between the (R) AN 20 and the AMF 141. N4 is a reference point between the SMF 142 and the UPF 121, and information is exchanged between these network functions (NFs).

As described above, in the core network CN1, an interface that transmits information and controls functions via an application programming interface (API) called a service-based interface (SBI) is prepared.

The API enables specification of a resource, and GET (acquisition of resource), POST (creation of resource and addition of data), PUT (creation of resource and update of resource), DELETE (deletion of resource), and the like for the resource. Such a function is generally used, for example, in the technical field related to the Web.

### <3-2. Private 5G/4G>

Currently, a local area network (LAN) is arranged in many offices and homes. The LAN includes a LAN cable, a router, and the like. The communication apparatus is connected to an Internet Service Provider (ISP) via a LAN. A private 5G or a private 4G operates by placing the cellular base station 20 in the LAN. In 3GPP (registered trademark), the private 5G/4G is called a non public network.

In the private 5G/4G, the base station 20 and the terminal apparatus 40 are arranged, for example, in an office, a factory, a private home, or the like in which a LAN is arranged. Meanwhile, the core network CN1 that controls the base station 20 may be arranged in a LAN or may be arranged in a cloud data center in the Internet. The base station 20 and the core network CN1 are given a private IP address, and can communicate with each other. For example, the base station 20 and the core network CN1 can communicate with each other using a private IP address by using a technology such as a virtual private network. As a result, the network connecting the base station 20 and the core network CN1 can be treated as a private network.

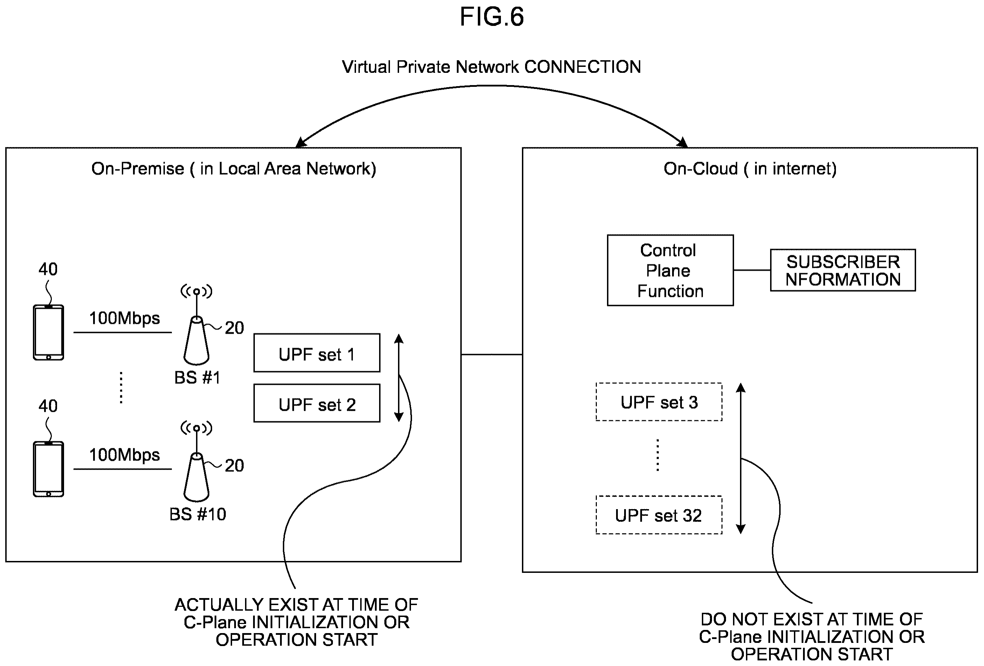

FIG. 6 is a diagram illustrating a usage example of the private 5G/4G. In the example of FIG. 6, a plurality of user plane functions (UPF) of the core network CN1 is arranged in the LAN and the cloud, and the control plane function of the core network CN1 is arranged in the cloud. In addition, in the example of FIG. 6, the base station 20 and the UE 40 are arranged in a LAN area.

The private 5G/4G is a non public network. In the private 5G/4G, it is often assumed that the UE 40, the base station 20, the core network CN1, and the application are arranged inside the virtual private network. In this case, for example, the UE 40 and the base station 20 can be arranged in a LAN area. In addition, the core network CN1 and the application may be arranged in either a LAN area or a cloud in the Internet.

Note that at least one UPF arranged in the LAN is present in the LAN when the control plane function is started or when the operation of the core network CN1 is started. Meanwhile, at least one UPF arranged on the Cloud does not exist on the Cloud when the control plane function is started or when the operation of the core network CN1 is started. The UPF arranged on the Cloud is, for example, a function that is started after the control plane function is started or after the operation of the core network CN1 is started.

Although the proposed technology of the present disclosure is not limited to the private network PN1, it is desirable that the private network PN1 is used in many use cases.

### <3-3. 5G Core Network API>

In the 5G core network, an application programming interface (API) called a service based interface (SBI) is prepared. The communication apparatus transmits information and controls functions via the API.

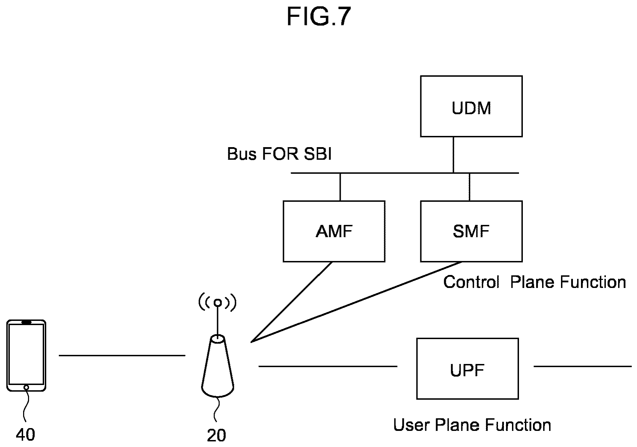

FIG. 7 is a diagram for explaining an API of a 5G core network. The API enables specification of a resource, and GET (acquisition of resource), POST (creation of resource and addition of data), PUT (creation of resource and update of resource), DELETE (deletion of resource), and the like for the resource. Such a function is a technique generally used in the web world. The AMF, the SMF, and the UDM in the figure need to exchange information with each other in a case of establishing a communication session or the like. The AMF, the SMF, and the UDM exchange information via the API.

Most of these APIs are not intended for application use. However, it is considered that the application can perform more advanced information processing using the information of the cellular network by using these APIs. An application is not allowed to use an API without permission in a public network. However, in the private 5G which is a non public network, the API can be used including modification of the API of the core network.

### <3-4. Example of API of 5G Core Network>

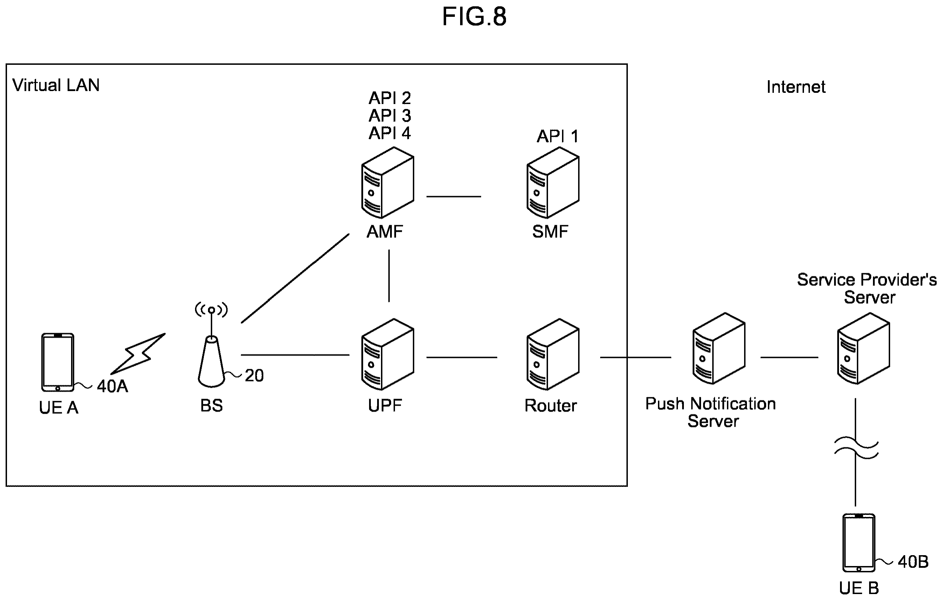

FIG. 8 is a diagram for explaining an API of a 5G core network. In the example of FIG. 8, the base station 20 and the core network CN1 are arranged in a virtual LAN. The base station 20 and the core network CN1 communicate with the Internet outside the virtual LAN via a router. Note that the API (1) to the API (4) described here are described in 3GPP TS23.502.

### API (1):

The API (1) is an API in which the SMF notifies that the UE registered in advance transitions from the power-off state to the power-on state and attaches to the network and the IP address acquired at that time.

### API (2):

The UE transitions to the Idle mode in a case of not communicating, and transitions to the Connected mode in a case of communicating. The API (2) is an API in which the AMF notifies whether the UE is in the Idle mode or the Connected mode.

### API (3):

The API (3) is an API for broadcasting, from the base station 20, a message (paging message) for instructing the UE to transition from the Idle mode to the Connected mode.

### API (4):

The API (4) is an API in which the AMF provides the position information of the UE. The AMF uses the API (4) to inform which Tracking Area the UE is in, which Cell the UE belongs to, and the like. In addition, the AMF may notify the UE when the UE enters a specific region by using the API (4). The position information of the UE notified by using the API (4) is rough position information unlike position information of a global positioning system (GPS). The position information of TPS is treated as the position information of the application layer, but the position information provided by the AMF is treated as the position information provided by the 3GPP RAN1. As described above, the AMF includes the AIP (4) for acquiring the position information of the 3GPP RAN1.

### <<4. Operation of Communication System SYS1>>

Based on the above, the operation of the communication system SYS1 will be described below.

### <4-1. First Embodiment>

First, the operation of the communication system SYS1 according to the first embodiment will be described.

### <4-1-1. Problem>

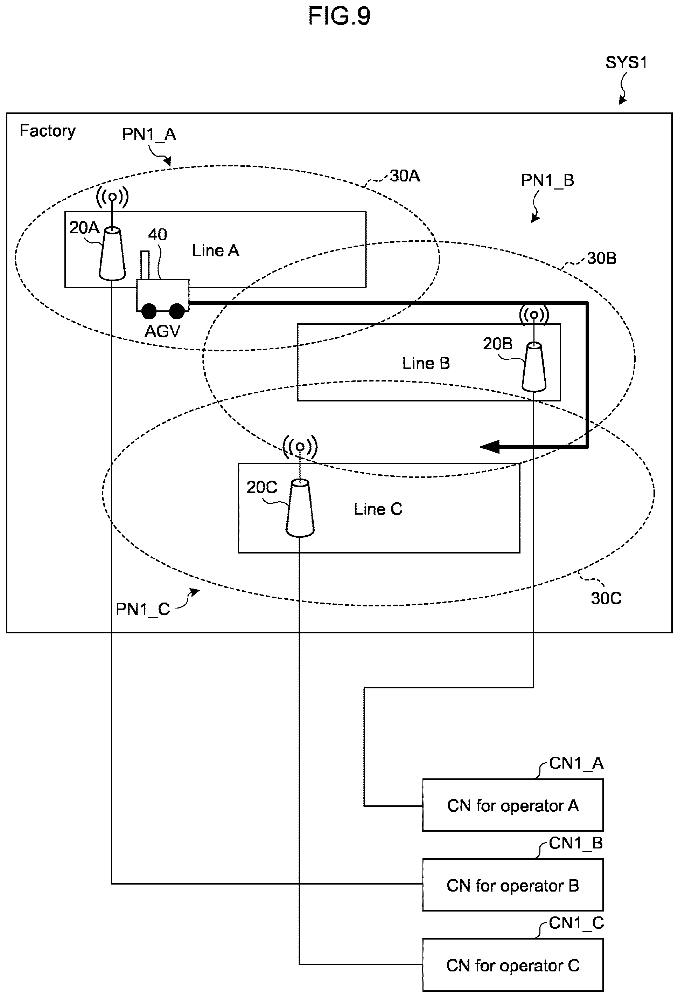

FIG. 9 is a diagram illustrating an example of a schematic configuration of a communication system SYS1 according to the first embodiment of the present disclosure.

As described above, in a case where the private network PN1 is disposed in an environment such as a factory, a plurality of different private networks PN1 may be adjacent in the factory. For example, in the case of a factory, a different private network PN1 may be arranged for each line (for example, a line for making a camera, a line for making a game, and the like) for making a product.

In the example of FIG. 9, three lines A to C are provided in one factory. Private networks PN1_A to PN1_C are arranged in each of the lines A to C.

The private network PN1_A includes a core network CN1_A and a base station 20A. The core network CN1_A is operated by, for example, the operator A. The base station 20A operates the cell 30A. That is, the private network PN1_A provides a communication service to the terminal apparatus 40 in the cell 30A. Note that although there is only one base station 20A in FIG. 9, the private network PN1_A may include a plurality of base stations 20A.

The private network PN1_B includes a core network CN1_B and a base station 20B. The core network CN1_B is operated by, for example, the operator B. The base station 20B operates the cell 30B. That is, the private network PN1_B provides a communication service to the terminal apparatus 40 in the cell 30B. Note that although there is only one base station 20B in FIG. 9, the private network PN1_B may include a plurality of base stations 20B.

The private network PN1_C includes a core network CN1_C and a base station 20C. The core network CN1_C is operated by, for example, the operator C. The base station 20C operates a cell 30C. That is, the private network PN1_C provides a communication service to the terminal apparatus 40 in the cell 30C. Note that, although there is only one base station 20C in FIG. 9, the private network PN1_C may include a plurality of base stations 20C.

Note that at least a part of the adjacent cells 30 among the cells 30A to 30C overlaps. In the example of FIG. 9, the cells 30A and 30B partially overlap. The cells 30B and 30A partially overlap.

In addition, the operators A to C may be the same operator or different operators. For example, the operators A to C may be operators who operate factories. Alternatively, the operators A to C may be administrators who manage manufacturing of products in each line. In this case, if the same administrator manages the plurality of lines (for example, lines A, B, and the like), the same operator (for example, operators A, B, and the like) may manage the plurality of lines.

In addition, FIG. 9 illustrates an example in which three lines A to C are provided and three private networks PN1_A to PN1_C are provided for each of the lines A to C, but the number of lines and the number of private networks PN1 are not limited to three. The number of lines and the number of private networks PN1 may be two or four or more. In addition, the number of lines and the number of private networks PN1 may not match. A plurality of private networks PN1 may be installed in one line, and one private network PN1 may be arranged in a plurality of lines.

In this way, by arranging the plurality of private networks PN1 so as to be adjacent to each other, for example, resistance at the time of failure occurrence can be enhanced. For example, if one private network PN1 is made to correspond to all the lines in the factory, the network of the entire factory stops when a failure occurs in the private network PN1.

In addition, in the case of a factory, from the viewpoint of security, there is a demand to manage product information for each line and not to output the information to the outside. Even in such a case, it is desirable to arrange the private network PN1 for each line.

In this way, a plurality of different private networks PN1 may be required to be arranged adjacent to each other. Meanwhile, there is a case where the terminal apparatus 40 using one of the plurality of private networks PN1 wants to move to another adjacent private network PN1.

For example, in a factory, the terminal apparatus 40 may be an automatic conveyance robot such as an automatic guided vehicle (AGV). The automatic conveyance robot performs work of conveying parts and members to appropriate positions.

In a case where the terminal apparatus 40 is an AGV as described above, the terminal apparatus 40 may move across a plurality of different private networks PN1. This is because the AGV carrying the member or the like may be shared between different lines. In the example of FIG. 9, the terminal apparatus 40 moves from the line A to the line B, and then moves to the line C.

Here, the fact that the private networks PN1 are different means that the core networks CN1 connected to the base station 20 are different. That is, in the private networks PN1_A and PN1_B, the core networks CN1_A and CN1_B are different from each other.

As described above, the core network CN1 is divided into the control plane function group 140 and the user plane function group 120. In a case where the private networks PN1 are different, both the control plane function group 140 and the user plane function group 120 are prepared exclusively for the operator who operates each private network PN1.

If at least some functions of the core network CN1 are shared by the plurality of operators A to C, in a case where a failure occurs in the shared functions, all the networks are stopped and cannot be used. Therefore, in the present embodiment, when the private networks PN1 are different, the core networks CN1 included in each private network PN1 are also different.

In addition, as described above, for example, there is a case where the private network PN1 is installed for the purpose of monitoring a public infrastructure such as a road or a railway track.

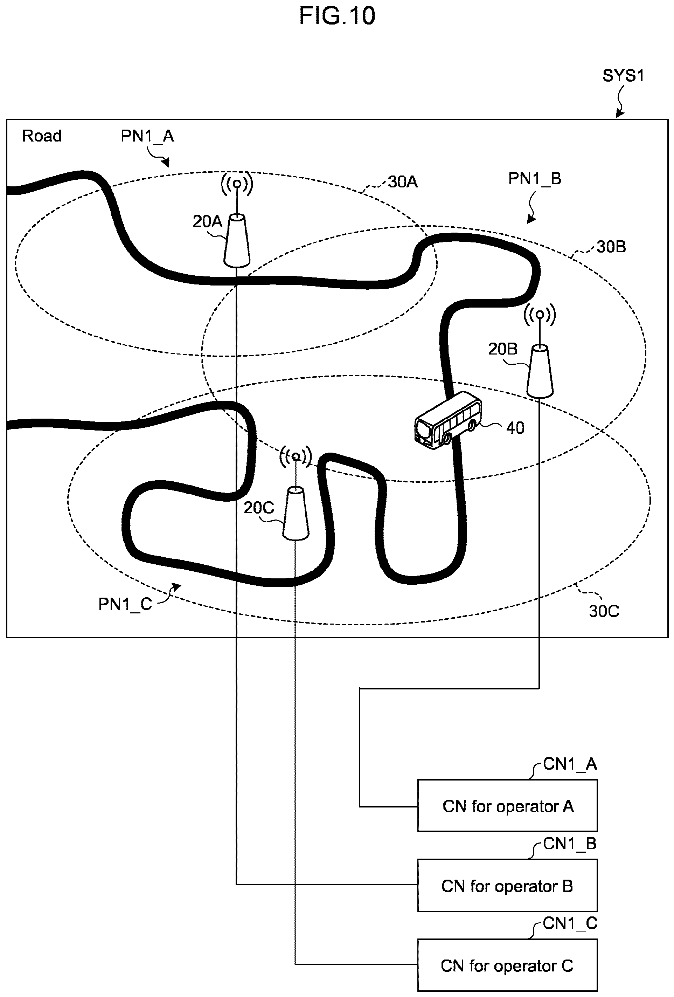

FIG. 10 is a diagram illustrating another example of the schematic configuration of the communication system SYS1 according to the first embodiment of the present disclosure. FIG. 10 illustrates an example in which a plurality of private networks PN1_A to PN1_C is constructed on a road. Note that, in FIG. 10, although there is a difference between the factory and the road, a plurality of private networks PN1_A to PN1_C is installed similarly to FIG. 9. Since the configurations of the private networks PN1_A to PN1_C are the same as those in FIG. 9, the description thereof will be omitted here.

As illustrated in FIG. 10, in a case where a private network PN1 is constructed in order to monitor a wide area such as a road or a railway track, it is desirable that a plurality of private networks PN1 is constructed.

This is because, if an attempt is made to monitor a wide area by one private network PN1, for example, in a case where the private network PN1 stops operating due to an earthquake, a network failure, or the like, the failure affects a wide area.

Therefore, in the present embodiment, in order to suppress the influence of the failure to be small, the monitoring area is divided into a plurality of areas as illustrated in FIG. 10, and the private network PN1 is constructed for each monitoring area.

Here, a train or a car moves on a road or a railway track. For example, in a case where the terminal apparatus 40 is a train or a car (a bus in the example of FIG. 10), the terminal apparatus 40 moves across a plurality of private networks PN1_A to PN1_C. Therefore, such a terminal apparatus 40 is required to move the private network PN1 as the own apparatus moves.

Alternatively, in a train, a bus, or the like, a case is also conceivable where the terminal apparatus 40 held by a passenger on a train or a bus moves. For example, in a case where a train or a car performs communication as the terminal apparatus 40, a use case is conceivable in which a situation of a railway track or a road, information of a running vehicle, and the like are uploaded. Meanwhile, for the terminal apparatus 40 held by the passenger, a use case of downloading a moving image or the like is considered.

In any case, the terminal apparatus 40 moves across a plurality of different private networks PN1 by moving on a railway track or a road.

As described above, as a method of crossing (switching connection) different private networks PN1, a method called roaming is conventionally used. The roaming is a method of using a network (PLMN) of a movement destination when the terminal apparatus 40 moves to a different Public Land Mobile Network (PLMN).

In a typical roaming method, the terminal apparatus 40 uses the UPF 120 of the movement destination, and the control plane function group 140 that handles the control signal uses the one of the network before the movement.

In a case where a plurality of private networks PN1 is constructed adjacent to each other as in the communication system SYS1 according to the present embodiment, in a case where conventional roaming is to be performed, it is necessary to set roaming between the networks.

In addition, in a case of moving across the plurality of private networks PN1, the user cannot move to the private network PN1 after the movement in a case where the radio wave of the private network PN1 before the movement arrives. In this respect, the movement between the private networks PN1 is different from the handover in which movement occurs between the plurality of base stations 20 (cells 30) in one network.

Roaming methods for moving across networks constructed in a wide area, such as a country, may not be suitable for movement between a plurality of adjacent private networks PN1, particularly private networks PN1 with limited communication areas.

In addition, in order to perform roaming, a roaming agreement is made between operators. In a case where roaming is performed in a plurality of private networks PN1, a roaming agreement may need to be concluded between operators who operate the private networks PN1. However, if the number of private networks PN1 is large, the number of contracts to be concluded also increases, and there is a problem that the procedure becomes complicated.

For example, as a method of switching the network to be connected, a method of switching the SIM is considered. For example, when moving across the private networks PN1, the connection destination private network PN1 is switched by replacing the SIM of the terminal apparatus 40 with the SIM corresponding to the subscriber file (subscriber information) of the movement destination private network PN1.

The SIM is, for example, an integrated circuit (IC) card in which information regarding a network subscriber is stored. Identification information and an encryption key for specifying a network subscriber are stored in the SIM. Examples of the identification information include an international mobile subscriber identity (IMSI) and a subscription permanent identifier (SUPI).

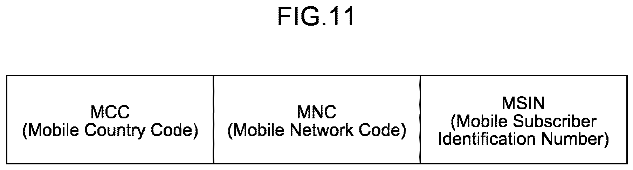

FIG. 11 is a diagram illustrating a configuration example of an IMSI. As illustrated in FIG. 11, the IMSI includes a mobile country code (MCC), a mobile network code (MNC), and a mobile subscriber identification number (MSIN).

In the MCC and the MNC, a network (the private network PN1 in the present embodiment) to which the terminal apparatus 40 can be connected is identified. The MSIN is identification information for identifying a subscriber in the network identified by the MCC and the MNC.

Note that the SUPI further includes a network access identifier (NAI) in the MCC, the MNC, and the MSIN that construct the IMSI.

As described above, the MCC and the MNC are network identification information. Usually, when the networks to which the terminal apparatus 40 is connected are different, the MCCs and the MNCs are different.

In a case of moving across the private networks PN1, the terminal apparatus 40 can be attached to the private network PN1 after the movement by switching from the SIM used before the movement to the SIM used in the private network PN1 after the movement. In this manner, the terminal apparatus 40 can switch the private network PN1 to be connected by replacing the SIM card.

However, it is practically difficult to insert and remove the SIM for each movement. Therefore, a method of electronically rewriting the contents of the SIM from the private network PN1 side using eSIM (embedded SIM) is considered.

However, even when the eSIM is used, an operation of rewriting the SIM occurs, and a procedure of switching the private network PN1 becomes complicated. In addition, a temporal loss of rewriting the SIM also occurs.

In the first place, in a case of rewriting the SIM using the eSIM, it is required to determine what kind of SIM the adjacent (post-movement) private network PN1 should be rewritten in in a short time before and after the movement.

As described above, there is a demand for a method by which the terminal apparatus 40 more easily moves between the adjacent private networks PN1.

### <4-1-2. Solution>

Therefore, in the present embodiment, it is assumed that the subscriber information is the same in a plurality of adjacent private networks PN1. That is, the MCC and the MNC are the same (common) in each private network PN1.

Note that the switching of the private network PN1 is executed by turning off the connection to the private network PN1 once, for example, by turning off the power of the terminal apparatus 40 or using the airplane mode or the like.

For example, in the present embodiment, the user who uses the terminal apparatus 40 determines to turn off the connection to the network PN1 once. That is, the user performs processing such as turning off the power of the terminal apparatus 40 once or switching to the airplane mode. As described above, in the present embodiment, the user determines switching of the private network PN1.

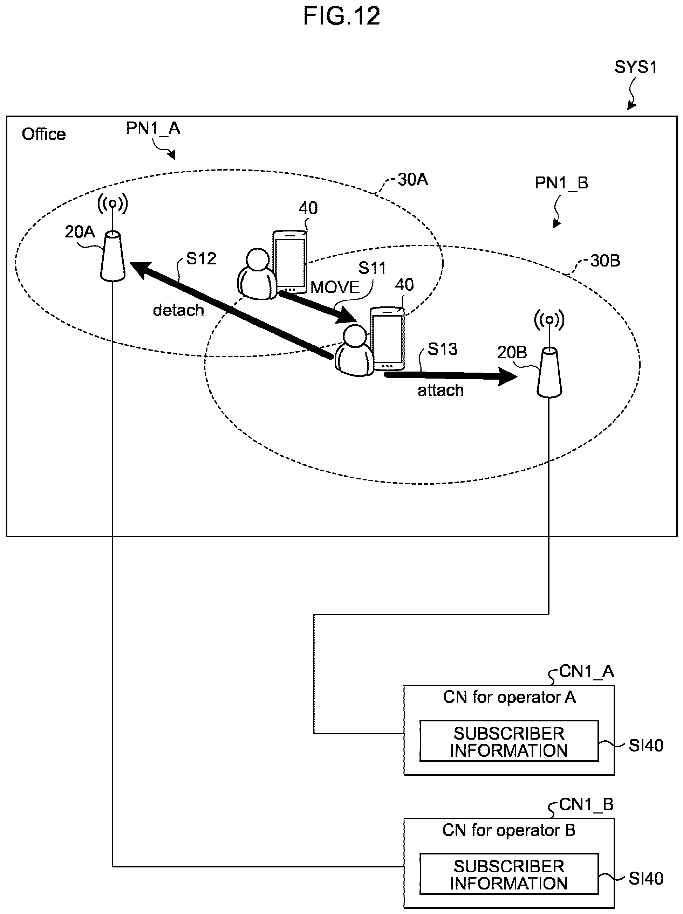

FIG. 12 is a diagram illustrating an example of communication processing according to the first embodiment of the present disclosure. In FIG. 12, for example, two private networks PN1_A and PN1_B are constructed in the office.

The private network PN1_A includes a core network CN1_A and a base station 20A. The core network CN1_A is operated by, for example, the operator A. In addition, subscriber information SI40 is set in the core network CN1_A.

The base station 20A operates the cell 30A. That is, the private network PN1_A provides a communication service to the terminal apparatus 40 in the cell 30A. Note that although there is only one base station 20A in FIG. 12, the private network PN1_A may include a plurality of base stations 20A.

The private network PN1_B includes a core network CN1_B and a base station 20B. The core network CN1_B is operated by, for example, the operator B. In addition, subscriber information SI40 is set in the core network CN1_B. The subscriber information SI40 is the same as the subscriber information SI40 set in the core network CN1_A.

The base station 20B operates the cell 30B. That is, the private network PN1_B provides a communication service to the terminal apparatus 40 in the cell 30B. Note that although there is only one base station 20B in FIG. 12, the private network PN1_B may include a plurality of base stations 20B.

Note that although FIG. 12 illustrates an example in which two private networks PN1_A and PN1_B are provided, the number of private networks PN1 is not limited to two. The number of private networks PN1 may be three or more.

As described above, in the present embodiment, the same subscriber information SI40 is set in the core networks CN1_A and CN1_B. Therefore, the terminal apparatus 40 may attach to different private networks PN1_A and PN1_B by using a same SIM. In other words, the terminal apparatus 40 attaches to the private network PN1_B by using the subscriber information SI40 used to attach the private network PN1_A.

The subscriber information SI40 is set in the control plane function group 140 of the core network CN1. Usually, when the core networks CN1 are different, subscriber information held by the core network CN1 is also different.

Meanwhile, in the present embodiment, even if the core networks CN1 are different, the subscriber information held by the core network CN1 is the same. This allows a user to connect to different core networks CN1 by using a same terminal apparatus 40 in a same SIM. As described above, the terminal apparatus 40 according to the present embodiment is in a state of having the right to connect to a plurality of different core networks CN1 with one SIM.

Even when the terminal apparatus 40 using the private network PN1_A enters the coverage (cell 30B) of the private network PN1_B, normally, the connection destination is not switched to the private network PN1_B. This is because the terminal apparatus 40 continues to capture weak radio waves of the private network PN1_A.

Since the private networks PN1_A and PN1_B are different networks, the terminal apparatus 40 cannot handover from the base station 20A to the base station 20B.

Therefore, as illustrated in FIG. 12, when moving to the coverage (cell 30B) of the private network PN1_B, the terminal apparatus 40 according to the present embodiment detaches from the private network PN1_A (step S11). Accordingly, the terminal apparatus 40 cancels the registration of the private network PN1_A.

For example, when the user turns off the power of the terminal apparatus 40 or switches to the airplane mode, the terminal apparatus 40 is detached from the private network PN1_B (step S12).

Next, the terminal apparatus 40 attaches to the private network PN1_B (step S13). As a result, the terminal apparatus 40 performs registration to the private network PN1_B.

For example, when the user turns on the power of the terminal apparatus 40 or exits the airplane mode, the terminal apparatus 40 performs the attachment.

For example, the user switches the power on/off according to the position of the user (in other words, the terminal apparatus 40). For example, the user determines switching of the private network PN1 according to the current position of the user and the radio field intensity of the terminal apparatus 40, and operates the power supply of the terminal apparatus 40. As a result, the terminal apparatus 40 detaches from the network once, and then performs the attachment again.

In a case where the terminal apparatus 40 is detached from the network once and then is attached again, the terminal apparatus usually attaches to the network via the base station 20 having high radio field intensity. Therefore, in the example of FIG. 12, the terminal apparatus 40 attaches to the private network PN1_B via the base station 20B.

As described above, in the communication processing according to the present embodiment, the terminal apparatus 40 cancels the registration of the private network PN1_A by once detaching from the private network PN1_A that is the movement source. Thereafter, the terminal apparatus 40 can attach to the private network PN1 having a high received radio field intensity by attaching again, and can perform registration in the private network PN1_B as the movement destination.

Note that, in a case where the radio wave of the private network PN1_A of the movement source is completely lost, the terminal apparatus 40 detaches from the private network PN1_A of the movement source and attempts connection to the new private network PN1_B.

However, in the present embodiment, a plurality of private networks PN1 is constructed in a narrow range such as a factory or an office. Therefore, different private networks PN1 can be arranged at close distances.

In such a case, the terminal apparatus 40 receives the radio wave of the private network PN1_A of the movement source at any time, and there is a possibility that the connection cannot be easily switched to the private network PN1_B of the movement destination.

Therefore, in the present embodiment, the terminal apparatus 40 detaches from the private network PN1_A as the movement source and attaches to the private network PN1_B as the movement destination by once turning off the power (alternatively, switch to the airplane mode).

As described above, the terminal apparatus 40 according to the present embodiment detaches the private network PN1_A via the application of the terminal apparatus 40. When attaching again, the terminal apparatus 40 attaches to the new private network PN1_B that is the movement destination. Thereby, the terminal apparatus 40 can move through a plurality of different private networks PN1 by using the same SIM.

Note that a wireless LAN such as WiFi (registered trademark) is exemplified as a technology similar to the private network PN1. It is not desirable to arrange the wireless LAN in a wide area by the same operator from the viewpoint of security.

Meanwhile, in the present embodiment, the communication system SYS1 secures security by dividing a wide area and arranging a plurality of small private networks PN1.

In a case where a wide area is divided and different wireless LANs are installed, a corresponding password is required to connect to each wireless LAN. In the wireless LAN, the terminal apparatus 40 (client) does not use the SIM to connect to the wireless LAN. Therefore, in the wireless LAN, there is no problem of switching the SIM in order to switch the network.

### <4-1-3. Effect>

As described above, in the present embodiment, the same subscriber information SI40 is set in a plurality of different core networks CN1. As a result, the terminal apparatus 40 can be connected to the plurality of private networks PN1 using one SIM. In addition, the user switches the connection destination of the private network PN1 by once turning off the power of the terminal apparatus 40 or the like. As a result, the terminal apparatus 40 can move between different private networks PN1.

As a result, the terminal apparatus 40 can use a plurality of independent networks in the same area such as a factory, an office, and a road. As described above, the communication system SYS1 can improve the tolerance to the failure of the entire system while maintaining the convenience of the user.

### <4-2. Second Embodiment>

### <4-2-1. Problem>

In the first embodiment described above, the terminal apparatus 40 is detached or attached from the private network PN1 by the user operating the power supply on the initiative. The terminal apparatus 40 is connected to the base station 20B having a large reception power of the reference signal during the attachment procedure, and performs communication using the core network CN1_B to which the base station 20B belongs. As a result, the terminal apparatus 40 can switch the connection between the private networks PN1 using the same SIM.

In the present embodiment, the terminal apparatus 40 is enabled to automatically switch the private network PN1 that is initiated by the user.

As a method in which the terminal apparatus 40 automatically determines the switching of the private network PN1, a method in which the switching is determined according to reception power such as a synchronization signal is considered. In this case, for example, in a case where the reception power becomes weak (smaller than the predetermined threshold value), the terminal apparatus 40 can determine the switching of the private network PN1.

The terminal apparatus 40 performs handover of the base station 20 according to the reception power. Therefore, in the method of determining the switching of the private network PN1 by the reception power, there arises a problem that it is difficult to determine whether the terminal apparatus 40 should perform the handover or should switch the private network PN1.

In the conventional handover, when the reception power from the serving base station becomes weak and the reception power from the adjacent base station 20 becomes strong, the terminal apparatus 40 attempts the handover. At this time, since the neighboring base station and the serving base station belong to the same core network CN1, signals indicating the same MCC and MNC are transmitted from the neighboring base station and the serving base station.

Also in the communication system SYS1 of the present embodiment, the same subscriber information SI40 is set in the core networks CN1_A and CN1_B. Therefore, signals indicating the same MCC and MNC are transmitted from the base station 20A belonging to the core network CN1_A and the base station 20B belonging to the core network CN1_B.

Therefore, when the reception power from the base station 20A belonging to the core network CN1_A becomes weak and the reception power from the base station 20B belonging to the core network CN1_B becomes strong, the terminal apparatus 40 attempts handover from the base station 20A to the base station 20B.

However, since the core networks CN1 to which the base stations 20A and 20B belong are different from each other, the base stations cannot exchange signals necessary for handover. Therefore, even if the reception power from the base station 20A becomes weak, the terminal apparatus 40 cannot handover to the base station 20B and continues to be connected to the original base station 20A.

### <4-2-2. Solution 1>

Therefore, in the present embodiment, the terminal apparatus 40 acquires the position information and determines the switching timing of the private network PN1 using the acquired position information.

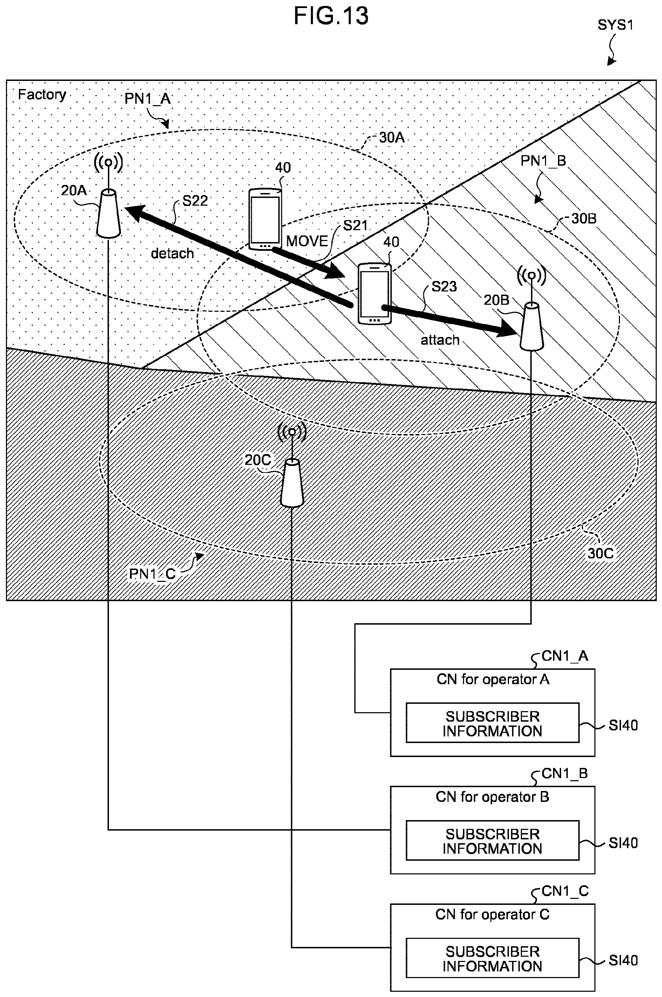

FIG. 13 is a diagram illustrating an example of communication processing according to the second embodiment of the present disclosure. Similarly to FIG. 9, FIG. 13 illustrates a case where the communication system SYS1 is applied to a factory. In FIG. 13, the lines A to C are not illustrated in order to simplify the illustration. Furthermore, the example of FIG. 13 illustrates a case where the terminal apparatus 40 is a smartphone. In addition, the same subscriber information SI40 is set in each of the core networks CN1_A to CN1_C.

The position information of the terminal apparatus 40 is acquired as information of an application layer from, for example, a GPS or the like mounted on the terminal apparatus 40. Alternatively, the terminal apparatus 40 may acquire the position information from the radio field intensities from a plurality of base stations (access points) of WiFi (registered trademark).

Alternatively, the terminal apparatus 40 can acquire the position information using Bluetooth (registered trademark). The terminal apparatus 40 may acquire the position information on the basis of geomagnetism. In this case, the terminal apparatus 40 (for example, the sensor section 44 of the terminal apparatus 40) includes a geomagnetic sensor that senses geomagnetism.

As described above, by using WiFi, Bluetooth, or geomagnetism, the terminal apparatus 40 can acquire the position information of the own apparatus even indoors.

In addition, the terminal apparatus 40 holds map information regarding a map in which a communication area of the private network PN1 that can be connected in advance is associated with position information. For example, in FIG. 13, the factory is divided into a connection area in which the terminal apparatus 40 is connected to the private network PN1_A, a connection area in which the terminal apparatus is connected to the private network PN1_B, and a connection area in which the terminal apparatus is connected to the private network PN1_C. The terminal apparatus 40 stores each piece of area element female map information in the storage section 42 in advance.

The terminal apparatus 40 determines whether or not the terminal apparatus has moved to the area of the new private network PN1 using the position information acquired in the application layer and the map information held in advance. In a case of determining that the terminal apparatus moves to the area of the new private network PN1, the terminal apparatus 40 detaches from the private network PN1 before the movement and attaches to the new movement destination) private network PN1.

As illustrated in FIG. 13, when the terminal apparatus 40 moves a certain distance or acquires the current position at regular intervals, and determines whether or not to connect to the new private network PN1 on the basis of the map information (step S21). For example, the terminal apparatus 40 determines whether or not the current position is a connection area of the private network PN1_A to which the terminal apparatus is currently connected.

In a case where the current position is a connection area of the private network PN1_A to which the terminal apparatus 40 is currently connected, the terminal apparatus determines not to connect to the new private network PN1.

In a case where the current position is not a connection area of the private network PN1_A to which the terminal apparatus 40 is currently connected, the terminal apparatus determines to connect to the new private network PN1. In this case, the terminal apparatus performs the detachment for the private network PN1_A to which the terminal apparatus 40 is currently connected (step S22).

Next, the terminal apparatus 40 executes attachment (step S23). As a result, the terminal apparatus 40 is connected to the private network PN1_B via the base station 20B.

In this manner, the terminal apparatus 40 switches the private network PN1 to be connected according to the acquired current position.

### <4-2-3. Solution 2>

In the above-described solution 1, the terminal apparatus 40 acquires the current position using radio waves such as GPS, but the method by which the terminal apparatus 40 acquires the position is not limited thereto. For example, the terminal apparatus 40 may acquire the position on the basis of an image obtained by capturing the surroundings of the terminal apparatus 40.

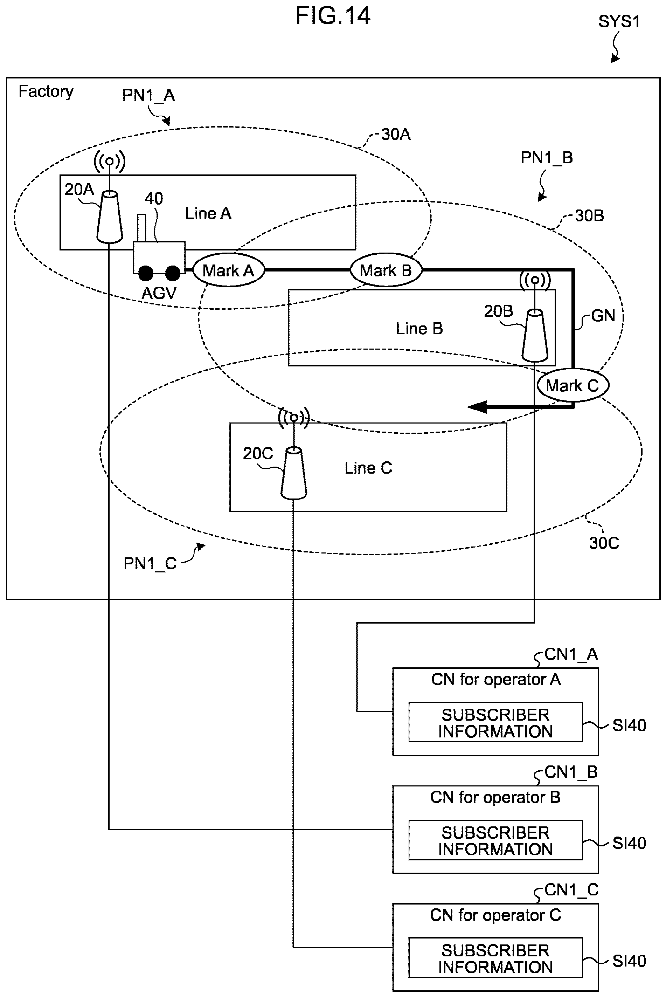

FIG. 14 is a diagram illustrating an example of a communication system SYS1 according to the second embodiment of the present disclosure. The communication system SYS1 illustrated in FIG. 14 is the same as the communication system SYS1 illustrated in FIG. 13 except that the terminal apparatus 40 is an automatic conveyance robot (AGV). Here, it is assumed that the terminal apparatus 40 moves along a guideline drawn on the floor.

In the example of FIG. 14, the guideline GN includes a marker indicating that the connection area has changed. For example, the connection area guideline GN of the private network PN1_A includes the marker A. The connection area guideline GN of the private network PN1_B includes a marker B. The connection area guideline GN of the private network PN1_C includes a marker C.

These markers A to C may be attached to all of the guidelines GN or may be drawn at the boundaries of the connection areas. The markers A to C may be represented by, for example, line patterns or may be represented by colors assigned to each connection area. In addition, in a case where the markers A to C are drawn at the boundaries of the connection areas, all the markers A to C may be the same. The markers A to C may be any markers that can determine whether or not to switch the private network PN1 to which the terminal apparatus 40 is connected.

The terminal apparatus 40 captures the guideline GN of the floor with, for example, a camera of the sensor section 44. In a case where the marker appears in the captured image of the camera, the terminal apparatus 40 determines to switch the private network PN1.

For example, in FIG. 14, the terminal apparatus 40 first detects the marker A. In this case, the terminal apparatus 40 is connected to the private network PN1_A via the base station 20A.

The terminal apparatus 40 moves along the guideline GN. The terminal apparatus 40 detects the marker B by moving along the guideline GN. In this case, the terminal apparatus 40 detaches from the private network PN1_A and then performs the attachment. As a result, the terminal apparatus 40 is connected to the private network PN1_B via the base station 20B.

Subsequently, when the terminal apparatus 40 moves along the guideline GN, the marker C is detected. In this case, the terminal apparatus 40 detaches from the private network PN1_B and then performs the attachment. As a result, the terminal apparatus 40 is connected to the private network PN1_C via the base station 20C.

In this manner, the terminal apparatus 40 recognizes the position to switch the private network PN1 according to the marker information drawn on the floor. The terminal apparatus 40 switches the private network PN1 according to the current position based on the marker information. The same subscriber information SI40 is set in the core networks CN1_A to CN1_C. Therefore, the terminal apparatus 40 can switch the private network PN1 using the same SIM by detaching from the private network PN1 before the movement and performing the attachment processing.

Note that, here, the terminal apparatus 40 detects the marker information from the captured image of the camera, but the detection of the position information using the camera is not limited to the method using the marker. For example, the terminal apparatus 40 may detect marker information drawn on a place other than a floor such as a ceiling of a factory. Alternatively, the terminal apparatus 40 may acquire the position information by detecting a subject included in the image, such as a landmark, in addition to the marker information. Alternatively, the terminal apparatus 40 may acquire the position information by acquiring the surrounding situation using a stereo camera or a distance measurement sensor. In this case, it is assumed that the terminal apparatus 40 holds a three-dimensional space map of a space (for example, a factory or the like) in which the own apparatus moves.

### <4-2-4. Effect>

In this way, the terminal apparatus 40 automatically specifies entering the coverage of the different private network PN1 using the position information. The terminal apparatus 40 acquires the position information on the basis of a radio wave or a captured image. As a result, the terminal apparatus 40 can move the private network PN1 at an appropriate timing regardless of an instruction from the user.

As a result, the communication system SYS1 can further reduce the labor of the user for switching the private network PN1. The communication system SYS1 can shorten the time required for switching the private network PN1.

In addition, since the terminal apparatus 40 according to the present embodiment does not need to turn off the power for switching the private network PN1, the terminal apparatus 40 can switch the private network PN1 without interrupting the application being executed.

### <4-3. Third Embodiment>

### <4-3-1. Problem 1>

In the first embodiment described above, the private network PN1 is switched by the user turning off the power once. Alternatively, the private network PN1 is switched by canceling the registration of the private network PN1 by an application such as the airplane mode. Also in the second embodiment, the application may determine the switching of the private network PN1 from the current position.

As described above, when the user or the application switches the private network PN1, there is a possibility that it takes time to switch.

### <4-3-2. Solution 1>

Therefore, in the present embodiment, the terminal apparatus 40 transmits a deregistration request/registration request to the core network CN1 in order to detach/attach to the private network PN1 on the basis of the position information.

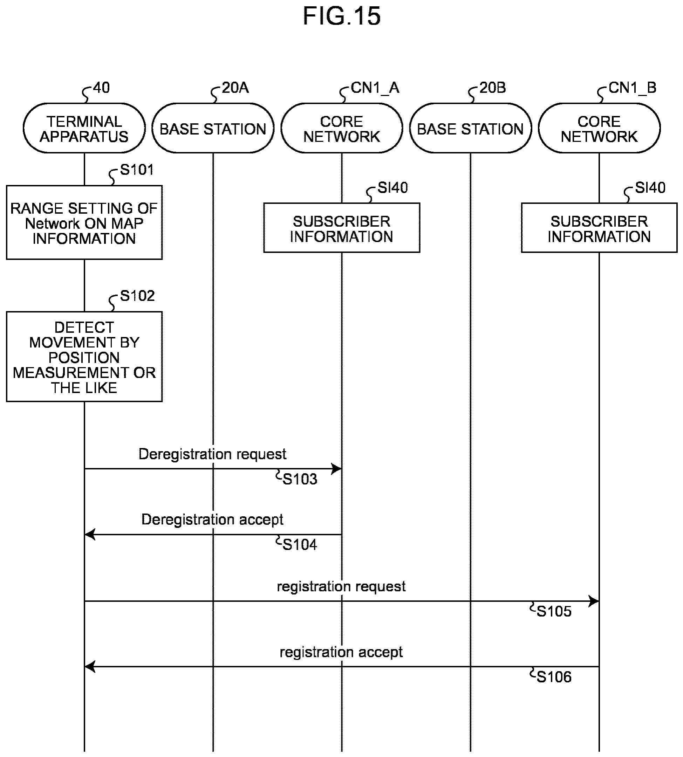

FIG. 15 is a sequence diagram illustrating an example of a flow of communication processing according to the third embodiment of the present disclosure. In the example of FIG. 15, the terminal apparatus 40 moves from the connection area of the private network PN1_A to the connection area of the private network PN1_B.

That is, the base station 20A is a serving base station to which the terminal apparatus 40 (before movement) is currently connected. The core network CN1_A is a serving core network to which the terminal apparatus 40 (before movement) is currently connected.

The base station 20B is a target base station to which the terminal apparatus 40 is connected after the movement. The core network CN1_B is a target core network to which the terminal apparatus 40 is connected after the movement.

As illustrated in FIG. 15, the same subscriber information SI40 is set in the core networks CN1_A and CN1_B. The core networks CN1_A and CN1_B are different core networks CN1 belonging to different private networks PN1_A and PN_B, respectively.

The terminal apparatus 40 sets the range (connection area) of the network (private network PN1) on the map information (step S101). Alternatively, the terminal apparatus 40 may acquire map information in which the range of the network is set in advance from the storage section 42.

Next, the terminal apparatus 40 detects movement of the private network PN1 by position measurement or the like (step S102). The terminal apparatus 40 detects movement (switching) of the private network PN1 on the basis of the map information and the acquired position information.

When detecting the switching, the terminal apparatus 40 transmits a deregistration request to the core network CN1_A via the base station 20A (step S103). The terminal apparatus 40 receives the deregistration accept from the core network CN1_A via the base station 20A (step S104). As a result, the registration of the private network PN1_A (the core network CN1_A) of the terminal apparatus 40 is canceled.

Next, the terminal apparatus 40 transmits a registration request to the core network CN1_B via the base station 20B (step S105). The terminal apparatus 40 transmits a registration request to the base station 20 having a large reception power. Therefore, the terminal apparatus 40 can be connected to the new (target) base station 20B. Since the base station 20B is connected to the core network CN1_B, the terminal apparatus 40 can transmit the registration request to the core network CN1_B by transmitting the registration request to the base station 20B having a large reception power.

The core network CN1_B that has received the registration request transmits a registration accept (step S106). As a result, the terminal apparatus 40 is registered in the private network PN1_B (core network CN1_B) as the movement destination.

Note that, here, the terminal apparatus 40 determines the switching of the private network PN1 on the basis of the map information, but the terminal apparatus 40 may determine the switching using, for example, a marker or the like.

As described above, in the present embodiment, a function of directly performing deregistration and registration regardless of an instruction from a user or an application is implemented in the terminal apparatus 40.

As a result, the terminal apparatus 40 can switch the private network PN1 regardless of the instruction of the user or the application, and the time required for the switching can be further shortened.

### <4-3-3. Problem 2>

There is a case where it is desired to determine switching of the private network PN1 on the private network PN1 side.

For example, not the terminal apparatus 40 but the private network PN1 side may hold the position information of the terminal apparatus 40. For example, in a cellular system of 3GPP (registered trademark), the core network CN1 has a function of specifying the position of the terminal apparatus 40 using a signal from the base station 20.

This is position information provided by the cellular system itself, unlike position information obtained by an application such as GPS. The position information is held by a location management function (LMF) of the core network CN1.

As described above, in a case where the core network CN1 side has the position information of the terminal apparatus 40, it is desirable that the private network PN1 side can switch the private network PN1.

### <4-3-4. Solution 2>

Therefore, in the present embodiment, the management apparatus 50 switches the private network PN1. The management apparatus 50 has a network switch management function that manages switching of the private network PN1. The management apparatus 50 may be an entity of the core network CN1 before movement or an entity (apparatus) arranged in the vicinity of the core network CN1 before movement.

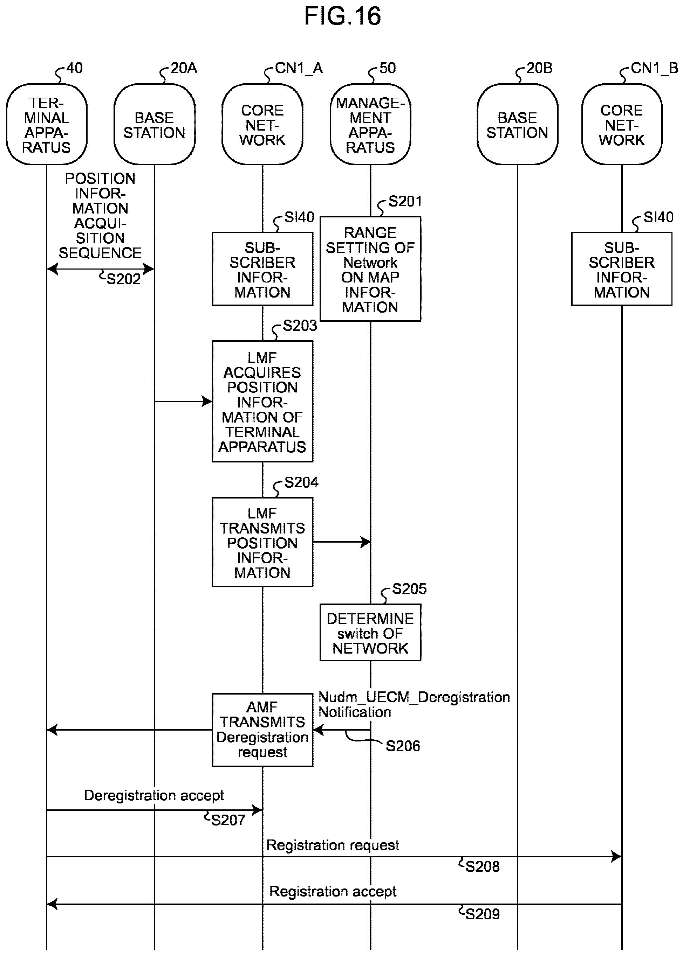

FIG. 16 is a sequence diagram illustrating another example of the flow of the communication processing according to the third embodiment of the present disclosure. In the example of FIG. 16, the terminal apparatus 40 moves from the connection area of the private network PN1_A to the connection area of the private network PN1_B.

That is, the base station 20A is a serving base station to which the terminal apparatus 40 (before movement) is currently connected. The core network CN1_A is a serving core network to which the terminal apparatus 40 (before movement) is currently connected.

The base station 20B is a target base station to which the terminal apparatus 40 is connected after the movement. The core network CN1_B is a target core network to which the terminal apparatus 40 is connected after the movement.

As illustrated in FIG. 16, the same subscriber information SI40 is set in the core networks CN1_A and CN1_B. The core networks CN1_A and CN1_B are different core networks CN1 belonging to different private networks PN1_A and PN1_B, respectively.

The management apparatus 50 sets the range (connection area) of the network (private network PN1) on the map information (step S201). Alternatively, the management apparatus 50 may acquire map information in which the range of the network is set in advance from the storage section.

Next, the base station 20A executes a position information acquisition sequence with the terminal apparatus 40 (step S202). The LMF of the core network CN1_A acquires the position information of the terminal apparatus 40 from the base station 20A (step S203). The LMF acquires the position information of the terminal apparatus 40 by using a function of a cellular system that specifies the position of the terminal apparatus 40 by using a signal from the base station 20.

The LMF transmits the acquired position information to the management apparatus 50 (step S204). The management apparatus 50 determines switching of the network (private network PN1) according to the map information and the acquired position information (step S205).

In a case where the private network PN1 is switched, the management apparatus 50 instructs an AMF 141A to transmit a deregistration request by hitting the API Nudm_UECM_DeregistrationNotification to the AMF 141A (step S206). Nudm_UECM_DeregistrationNotification can be implemented, for example, by utilizing a standardized API of the AMF141.

The AMF 141A transmits a deregistration request (an example of an instruction) to the terminal apparatus 40 via the base station 20A (step S206). On the other hand, the terminal apparatus 40 transmits the deregistration accept to the core network CN1_A via the base station 20A (step S207). As a result, the registration of the private network PN1_A (the core network CN1_A) of the terminal apparatus 40 is canceled.

Next, the terminal apparatus 40 transmits a registration request to the core network CN1_B via the base station 20B (step S208). The terminal apparatus 40 transmits a registration request to the base station 20 having a large reception power. Therefore, the terminal apparatus 40 can be connected to the new (target) base station 20B. Since the base station 20B is connected to the core network CN1_B, the terminal apparatus 40 can transmit the registration request to the core network CN1_B by transmitting the registration request to the base station 20B having a large reception power.

The core network CN1_B that has received the registration request transmits a registration accept (step S209). As a result, the terminal apparatus 40 is registered in the private network PN1_B (core network CN1_B) as the movement destination.

Note that it is assumed that the terminal apparatus 40 is implemented to automatically transmit a registration request after transmitting the deregistration accept.

In this manner, the terminal apparatus 40 cancels the registration of the private network PN1_A according to the instruction (deregistration request) from the private network PN1_A side. Thereafter, the terminal apparatus 40 performs registration to the private network PN1_B.

### <4-3-5. Effect>

As described above, when the terminal apparatus 40 or the network side transmits the deregistration request, the terminal apparatus 40 can automatically switch the private network PN1.

### <4-4. Fourth Embodiment>

### <4-4-1. Problem>

In each embodiment described above, the same subscriber information SI40 is set in each core network CN1. In other words, the same MNC and MCC are allocated to each private network PN1. However, allocation of different MNCs and MCCs may be desired for each private network PN1. Note that, in this case, it is sufficient that at least one of the MNCs or the MCCs is different. Hereinafter, "MNCs and MCCs are different" means that at least one of the MNCs or MCCs is different.

Usually, when the private networks PN1 are different, the allocated MNCs and MCCs are different. For example, it is assumed that a private network PN1 is constructed for each product line in a factory. In this case, since the responsible person of each line is generally different, the operators of the private networks PN1 are different.

In this way, in a case where a plurality of private networks PN1 is different, such as different operators of the private network PN1, it may be desirable to assign different MNCs and NCCs to clearly indicate this.

As described above, even in a case where the MNCs and the NCCs are different (in other words, the same subscriber information SI40 is not set), the communication system SYS1 capable of more easily moving between the private networks PN1 is desired.

As a means for moving between the private networks PN1 without replacing the SIM, a method of using an electronic SIM such as an eSIM is conceivable.

The eSIM has an electronic profile (eSIM profile) downloaded from the network to the terminal apparatus 40. The terminal apparatus 40 connects to the private network PN1 by using the downloaded eSIM profile (subscriber information) as the SIM.

The terminal apparatus 40 may download a plurality of eSIM profiles in advance. The terminal apparatus 40 may switch a plurality of eSIM profiles and connect to different private networks PN1.

However, the terminal apparatus 40 does not know at which timing to switch to which eSIM profile.

Usually, one terminal apparatus 40 selects and uses one eSIM profile. Switching is generally performed, for example, by a user who initiates switching while viewing a graphical user interface (GUI) of a screen.

As described above, in order to switch the private network PN1, it is a problem that at which timing the terminal apparatus 40 automatically switches the eSIM.

### <4-4-2. Solution>

Here, it is assumed that the terminal apparatus 40 holds the eSIM information in advance. For example, the terminal apparatus 40 stores the eSIM information in the storage section 42.

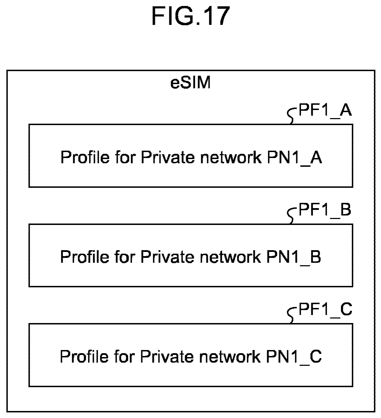

FIG. 17 is a diagram illustrating an example of an eSIM according to the fourth embodiment of the present disclosure. In FIG. 17, an eSIM having three eSIM profiles is illustrated.

As illustrated in FIG. 17, the eSIM includes a profile PF1_A (an example of first subscriber information) for the private network PN1_A, a profile PF1_B (an example of second subscriber information) for the private network PN1_B, and a profile PF1_C for the private network PN1_C.

The terminal apparatus 40 switches the profile PF1 for each private network PN1. As a method of switching the profile PF1 by the terminal apparatus 40, for example, a method of switching according to reception power of a reference signal from the base station 20, such as reference signals received power (RSRP), can be considered.

For example, in a case where the reception power of the reference signal transmitted by the base station 20 of one private network PN1_A becomes smaller than the predetermined threshold value, the terminal apparatus 40 switches to the profile PF1 of the other private network PN1. By switching the profile PF1, the terminal apparatus 40 attempts connection (switching) to the new (other) private network PN1. In a case where the terminal apparatus 40 cannot connect to the new private network PN1, the terminal apparatus switches the profile PF1 in order to attempt to connect to another private network PN1.

In this manner, the terminal apparatus 40 can automatically switch the private network PN1 by switching the profile PF1 according to the reception power. In other words, the terminal apparatus 40 uses the profile PF1_B different from the profile PF1_A used for registration of the private network PN1_A for registration of the private network PN1_B.

However, when the number of private networks PN1 to be connected increases, in other words, when the number of profiles PF1 held by the terminal apparatus 40 increases, it takes time to switch the private network PN1.

Furthermore, in a case where a plurality of private networks PN1 is arranged in a narrow range, there is a possibility that the terminal apparatus 40 can maintain the connection to the original private network PN1 as long as the reception power does not fall below the predetermined threshold value even if the reception power is weak.

Therefore, in the present embodiment, similarly to the second embodiment, in a case where the connection area is changed, the terminal apparatus 40 determines to switch the private network PN1 to be connected. The present embodiment is different from the second embodiment in that the terminal apparatus 40 switches the profile PF1 used for connection when determining to switch the private network PN1.

In the present embodiment, it is assumed that the connection area and the profile PF1 to be used are associated in advance. The terminal apparatus 40 selects the profile PF1 to be used according to which connection area the position of the own apparatus is included. As a result, the terminal apparatus 40 can further shorten the time required for switching the private network PN1.

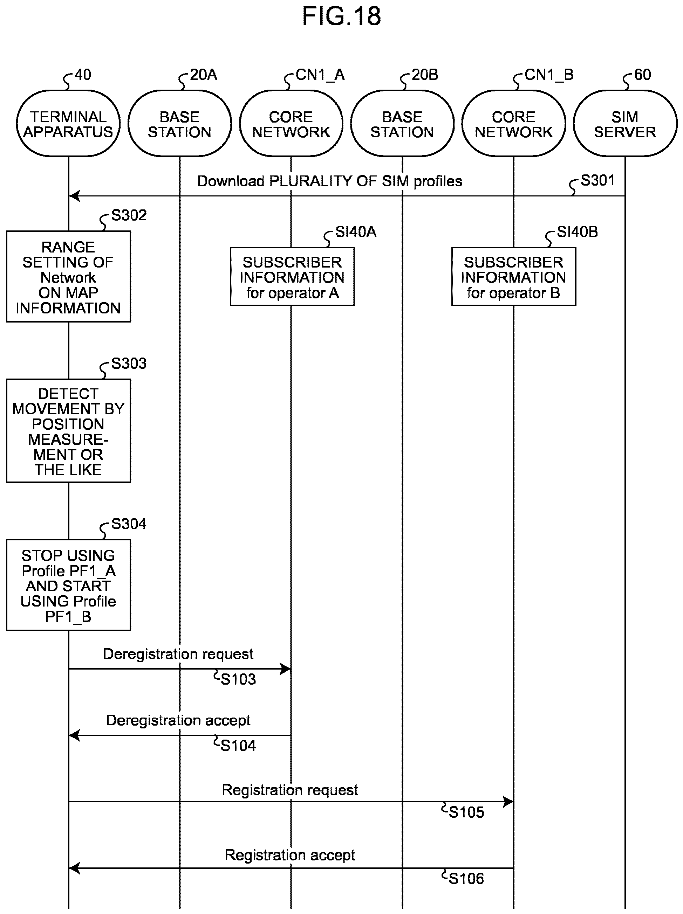

FIG. 18 is a sequence diagram illustrating an example of a flow of communication processing according to the fourth embodiment of the present disclosure. In the example of FIG. 18, the terminal apparatus 40 moves from the connection area of the private network PN1_A to the connection area of the private network PN1_B.

That is, the base station 20A is a serving base station to which the terminal apparatus 40 (before movement) is currently connected. The core network CN1_A is a serving core network to which the terminal apparatus 40 (before movement) is currently connected.

The base station 20B is a target base station to which the terminal apparatus 40 is connected after the movement. The core network CN1_B is a target core network to which the terminal apparatus 40 is connected after the movement.

As illustrated in FIG. 18, different pieces of subscriber information SI40A and SI40B are set in the core networks CN1_A and CN1_B, respectively. The subscriber information SI40A is subscriber information for the operator A. The subscriber information SI40B is subscriber information for the operator B. The core networks CN1_A and CN1_B are different core networks CN1 belonging to different private networks PN1_A and PN1_B, respectively.

In addition, the SIM server 60 is an information processing apparatus that manages an eSIM profile for connection to the private network PN1.

As illustrated in FIG. 18, the terminal apparatus 40 downloads a plurality of SIM profiles (here, eSIM profiles) from the SIM server 60 (step S301). The terminal apparatus 40 can download a plurality of SIM profiles via a network different from the private network PN1, such as a wireless LAN, a wired LAN, or a public network.

The terminal apparatus 40 sets the range (connection area) of the network (private network PN1) on the map information (step S302). Alternatively, the terminal apparatus 40 may acquire map information in which the range of the network is set in advance from the storage section 42.

Next, the terminal apparatus 40 detects movement of the private network PN1 by position measurement or the like (step S303). The terminal apparatus 40 detects movement (switching) of the private network PN1 on the basis of the map information and the acquired position information.

When detecting the switching, the terminal apparatus 40 determines which profile to switch to. For example, the terminal apparatus 40 determines the profile PF1 to be switched according to which connection area the acquired position information includes. Here, the terminal apparatus 40 determines switching from the profile PF1_A to the profile PF1_B.

In accordance with this determination, the terminal apparatus 40 stops using the profile PF1_A and starts using the profile PF1_B (step S304). Note that subsequent processing is the same as the communication processing illustrated in FIG. 15, and thus description thereof is omitted.

Note that, here, the terminal apparatus 40 determines the switching of the private network PN1 on the basis of the map information, but the terminal apparatus 40 may determine the switching using, for example, a marker or the like.

In addition, although the terminal apparatus 40 determines the switching of the private network PN1 here, the determination may be made on the network side.

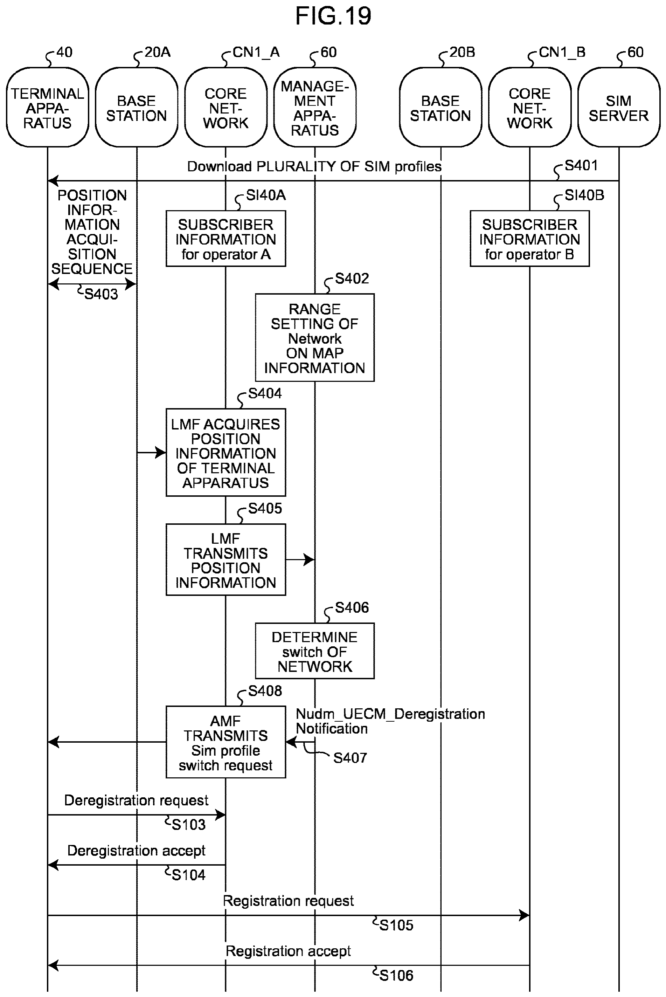

FIG. 19 is a sequence diagram illustrating another example of the flow of the communication processing according to the fourth embodiment of the present disclosure. In the example of FIG. 19, the terminal apparatus 40 moves from the connection area of the private network PN1_A to the connection area of the private network PN1_B.

That is, the base station 20A is a serving base station to which the terminal apparatus 40 (before movement) is currently connected. The core network CN1_A is a serving core network to which the terminal apparatus 40 (before movement) is currently connected.

The base station 20B is a target base station to which the terminal apparatus 40 is connected after the movement. The core network CN1_B is a target core network to which the terminal apparatus 40 is connected after the movement.

Different pieces of subscriber information SI40A and SI40B are set in the core networks CN1_A and CN1_B, respectively. The subscriber information SI40A is subscriber information for the operator A. The subscriber information SI40B is subscriber information for the operator B. The core networks CN1_A and CN1_B are different core networks CN1 belonging to different private networks PN1_A and PN1_B, respectively.

As illustrated in FIG. 19, the terminal apparatus 40 downloads a plurality of SIM profiles (here, eSIM profiles) from the SIM server 60 (step S401). The terminal apparatus 40 can download a plurality of SIM profiles via a network different from the private network PN1, such as a wireless LAN, a wired LAN, or a public network.

The management apparatus 50 sets the range (connection area) of the network (private network PN1) on the map information (step S402). Alternatively, the management apparatus 50 may acquire map information in which the range of the network is set in advance from the storage section.

Next, the base station 20A executes a position information acquisition sequence with the terminal apparatus 40 (step S403). The LMF of the core network CN1_A acquires the position information of the terminal apparatus 40 from the base station 20A (step S404). The LMF acquires the position information of the terminal apparatus 40 by using a function of a cellular system that specifies the position of the terminal apparatus 40 by using a signal from the base station 20.

The LMF transmits the acquired position information to the management apparatus 50 (step S405). The management apparatus 50 determines switching of the network (private network PN1) according to the map information and the acquired position information (step S406).

The management apparatus 50 determines to move (switch) the private network PN1 on the basis of the map information and the acquired position information.

In this case, the management apparatus 50 determines which profile to switch to. For example, the management apparatus 50 determines the profile PF1 to be switched according to which connection area the acquired position information is included. Here, the management apparatus 50 determines switching from the profile PF1_A to the profile PF1_B.

In accordance with this determination, the management apparatus 50 instructs the terminal apparatus 40 to stop using the profile PF1_A and start using the profile PF1_B.

For example, the management apparatus 50 instructs the AMF 141A to transmit a profile switching request by hitting an API called Nudm_UECM_DeregistrationNotification on the AMF 141A (step S407). Nudm_UECM_DeregistrationNotification can be implemented, for example, by utilizing a standardized API of the AMF141.

The AMF 141A transmits a profile switching request to the terminal apparatus 40 via the base station 20A (step S408). Note that subsequent processing is the same as the communication processing illustrated in FIG. 18, and thus description thereof is omitted.

Note that it is assumed that the terminal apparatus 40 is implemented to transmit the deregistration request by switching to the specified profile PF1_B after receiving the profile switching request.

### <4-4-3. Effect>

As described above, the terminal apparatus 40 or the network side according to the present embodiment selects the profile PF1 to be switched according to the position of the terminal apparatus 40. As a result, even in a case where the subscriber information SI40 set for each core network CN1 is different, the terminal apparatus 40 can switch the private network PN1. The communication system SYS1 according to the present embodiment can set different MNCs and MCCs for each private network PN1. The communication system SYS1 according to the present embodiment is useful in a case where it is desired to set different MNCs and MCCs for each private network PN1, such as a case where the operators are completely different (for example, the operators are different companies).

### <<5. Other Embodiments>>

The above-described embodiments are examples, and various modifications and applications are possible.

The control apparatus that controls the information processing apparatus 10, the base station 20, or the terminal apparatus 40 of the present embodiment may be realized by a dedicated computer system or a general-purpose computer system.

For example, a communication program for executing the above-described operation is stored and distributed in a computer-readable recording medium such as an optical disk, a semiconductor memory, a magnetic tape, or a flexible disk. Then, for example, the program is installed in a computer, and the above-described processing is executed to configure the control apparatus. At this time, the control apparatus may be an external apparatus (for example, a personal computer) of the information processing apparatus 10, the base station 20, or the terminal apparatus 40. Furthermore, the control apparatus may be an apparatus (for example, the control section 13, the control section 24, and the control section 45) inside the information processing apparatus 10, the base station 20, or the terminal apparatus 40.

In addition, the communication program described above may be stored in a disk apparatus included in a server apparatus on a network such as the Internet so that the communication program can be downloaded to a computer. In addition, the above-described functions may be realized by cooperation of an operating system (OS) and application software. In this case, a portion other than the OS may be stored in a medium and distributed, or a portion other than the OS may be stored in a server apparatus and downloaded to a computer or the like.

In addition, among the processes described in the above embodiments, all or a part of the processes described as being performed automatically can be performed manually, or all or a part of the processes described as being performed manually can be performed automatically by a known method. In addition, the processing procedure, specific name, and information including various data and parameters illustrated in the document and the drawings can be arbitrarily changed unless otherwise specified. For example, the various types of information illustrated in each figure are not limited to the illustrated information.

In addition, each component of each apparatus illustrated in the drawings is functionally conceptual, and is not necessarily physically configured as illustrated in the drawings. That is, a specific form of distribution and integration of each apparatus is not limited to the illustrated form, and all or a part thereof can be functionally or physically distributed and integrated in an arbitrary unit according to various loads, usage conditions, and the like. Note that this configuration by distribution and integration may be performed dynamically.

In addition, the above-described embodiments can be appropriately combined in an area in which the processing contents do not contradict each other. Furthermore, the order of each step illustrated in the sequence diagram of the above-described embodiments can be changed as appropriate.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set obtained by further adding other functions to a unit, or the like (that is, a configuration of a part of the apparatus).

Note that, in the present embodiment, the system means a set of a plurality of components (apparatuses, modules (parts), or the like), and it does not matter whether or not all the components are in the same housing. Therefore, a plurality of apparatuses housed in separate housings and connected via a network and one apparatus in which a plurality of modules is housed in one housing are both systems.

Furthermore, for example, the present embodiment can adopt a configuration of cloud computing in which one function is shared and processed by a plurality of apparatuses in cooperation via a network.

### <<6. Conclusion>>

Although the embodiments of the present disclosure have been described above, the technical scope of the present disclosure is not limited to the above-described embodiments as it is, and various modifications can be made without departing from the gist of the present disclosure. In addition, components of different embodiments and modifications may be appropriately combined.

Furthermore, the effects of each embodiment described in the present specification are merely examples and are not limited, and other effects may be provided.

Note that the present technology can also have the following configurations.
(1) A terminal apparatus comprising:
   a communication section that communicates with a first private network including a first core network in a first area, or communicates with a second private network including a second core network different from the first core network in a second area; and
   a control section that cancels registration of the first core network and performs registration to the second core network according to a position of an own apparatus.
(2) The terminal apparatus according to (1), wherein the control section performs the registration to the second core network by using subscriber information used to register the first core network.
(3) The terminal apparatus according to (1), wherein the control section performs the registration to the second core network by using second subscriber information different from first subscriber information used for registration of the first core network.
(4) The terminal apparatus according to (3), wherein the first subscriber information and the second subscriber information are stored in an embedded Subscriber Identity Module (eSIM).
(5) The terminal apparatus according to any one of (1) to (4), wherein the control section cancels the registration of the first core network and performs the registration to the second core network according to map information indicating the first area and the second area and the position of the own apparatus.
(6) The terminal apparatus according to any one of (1) to (5), wherein the control section cancels the registration of the first core network and performs the registration to the second core network according to subject information included in an image acquired by a camera.
(7) The terminal apparatus according to any one of (1) to (4), wherein the control section cancels the registration of the first core network and performs the registration to the second core network according to an instruction from the first core network.
(8) The terminal apparatus according to any one of (1) to (7), wherein
   the control section cancels the registration of the first core network and performs the registration to the second core network according to an instruction from a management apparatus, and
   the management apparatus performs the instruction using an application programming interface (API) of an access management function (AMF) on a basis of position information of a terminal apparatus held by a location management function (LMF).
(9) The terminal apparatus according to (8), wherein the management apparatus is an apparatus that implements at least some functions of the first core network or an apparatus disposed in a vicinity of the first core network.
(10) The terminal apparatus according to any one of (1) to (6), wherein the control section cancels the registration of the first core network and performs the registration to the second core network according to an instruction from a user who uses the own apparatus.
(11) The terminal apparatus according to any one of (1) to (10), in which at least a part of the second area overlaps the first area.
(12) A communication apparatus including
   a control section that instructs a terminal apparatus that performs communication with a first private network including a first core network in a first area or performs communication with a second private network including a second core network different from the first core network in a second area to cancel registration of the first core network and perform registration to the second core network according to a position of the terminal apparatus.
(13) The communication apparatus according to (12), wherein the control section performs the instruction using an API of an AMF on a basis of position information of a terminal apparatus held by an LMF.
(14) The communication apparatus according to (12) or (13), wherein the communication apparatus implements at least some functions of the first core network or is disposed near the first core network.
(15) A communication system comprising:
   a terminal apparatus; and
   a first private network that includes a base station and a first core network, and communicates with the terminal apparatus, wherein
   the terminal apparatus includes:
      a communication section that communicates with the first private network in a first area, or communicates with a second private network including a second core network different from the first core network in a second area; and
      a control section that cancels registration of the first core network and performs registration to the second core network according to a position of an own apparatus.
(16) A communication method comprising:
   communicating with a first private network including a first core network in a first area, or communicating with a second private network including a second core network different from the first core network in a second area; and
   canceling registration of the first core network and performing registration to the second core network according to a position of an own apparatus.
(17) A communication method comprising
   instructing a terminal apparatus that performs communication with a first private network including a first core network in a first area or performs communication with a second private network including a second core network different from the first core network in a second area to cancel registration of the first core network and perform registration to the second core network according to a position of the terminal apparatus.
(18) A communication method of a communication system, comprising:
   a terminal apparatus; and
   a first private network that includes a base station and a first core network, and communicates with the terminal apparatus, wherein
   the terminal apparatus performs communication with the first private network in a first area, or performs communication with a second private network including a second core network different from the first core network in a second area, and
   the terminal apparatus cancels registration of the first core network and performs registration to the second core network according to a position of an own apparatus.

### Reference Signs List

10 INFORMATION PROCESSING APPARATUS
11 COMMUNICATION SECTION
12, 22, 42 STORAGE SECTION
13, 24, 45 CONTROL SECTION
20 BASE STATION
21, 41 SIGNAL PROCESSING SECTION
23 NETWORK COMMUNICATION SECTION
40 TERMINAL APPARATUS
44 SENSOR SECTION
50 COMMUNICATION APPARATUS
CN CORE NETWORK
PN PRIVATE NETWORK
S COMMUNICATION SYSTEM
60 SERVER SIM

## Claims

1. A terminal apparatus comprising:
a communication section that communicates with a first private network including a first core network in a first area, or communicates with a second private network including a second core network different from the first core network in a second area; and
a control section that cancels registration of the first core network and performs registration to the second core network according to a position of an own apparatus.

2. The terminal apparatus according to claim 1, wherein the control section performs the registration to the second core network by using subscriber information used to register the first core network.

3. The terminal apparatus according to claim 1, wherein the control section performs the registration to the second core network by using second subscriber information different from first subscriber information used for registration of the first core network.

4. The terminal apparatus according to claim 3, wherein the first subscriber information and the second subscriber information are stored in an embedded Subscriber Identity Module (eSIM).

5. The terminal apparatus according to claim 1, wherein the control section cancels the registration of the first core network and performs the registration to the second core network according to map information indicating the first area and the second area and the position of the own apparatus.

6. The terminal apparatus according to claim 1, wherein the control section cancels the registration of the first core network and performs the registration to the second core network according to subject information included in an image acquired by a camera.

7. The terminal apparatus according to claim 1, wherein the control section cancels the registration of the first core network and performs the registration to the second core network according to an instruction from the first core network.

8. The terminal apparatus according to claim 1, wherein
the control section cancels the registration of the first core network and performs the registration to the second core network according to an instruction from a management apparatus, and
the management apparatus performs the instruction using an application programming interface (API) of an access management function (AMF) on a basis of position information of a terminal apparatus held by a location management function (LMF).

9. The terminal apparatus according to claim 8, wherein the management apparatus is an apparatus that implements at least some functions of the first core network or an apparatus disposed in a vicinity of the first core network.

10. The terminal apparatus according to claim 1, wherein the control section cancels the registration of the first core network and performs the registration to the second core network according to an instruction from a user who uses the own apparatus.

11. A communication apparatus comprising
a control section that instructs a terminal apparatus that communicates with a first private network including a first core network in a first area, or communicates with a second private network including a second core network different from the first core network in a second area at least partially overlapping with the first area, to cancel registration of the first core network and perform registration to the second core network according to a position of the terminal apparatus.

12. The communication apparatus according to claim 11, wherein the control section performs the instruction using an API of an AMF on a basis of position information of a terminal apparatus held by an LMF.

13. The communication apparatus according to claim 11, wherein the communication apparatus implements at least some functions of the first core network or is disposed near the first core network.

14. A communication system comprising:
a terminal apparatus; and
a first private network that includes a base station and a first core network, and communicates with the terminal apparatus, wherein
the terminal apparatus includes:
a communication section that communicates with the first private network in a first area, or communicates with a second private network including a second core network different from the first core network in a second area; and
a control section that cancels registration of the first core network and performs registration to the second core network according to a position of an own apparatus.

15. A communication method comprising:
communicating with a first private network including a first core network in a first area, or communicating with a second private network including a second core network different from the first core network in a second area; and
canceling registration of the first core network and performing registration to the second core network according to a position of an own apparatus.

16. A communication method comprising
instructing a terminal apparatus that performs communication with a first private network including a first core network in a first area or performs communication with a second private network including a second core network different from the first core network in a second area to cancel registration of the first core network and perform registration to the second core network according to a position of the terminal apparatus.

17. A communication method of a communication system, comprising:
a terminal apparatus; and
a first private network that includes a base station and a first core network, and communicates with the terminal apparatus, wherein
the terminal apparatus performs communication with the first private network in a first area, or performs communication with a second private network including a second core network different from the first core network in a second area, and
the terminal apparatus cancels registration of the first core network and performs registration to the second core network according to a position of an own apparatus.
